# EUROPEAN PATENT APPLICATION

(11) **EP 4 819 510 A1**
(43) Date of publication of application: **07.10.2026**
(21) Application number: 25167502.1
(22) Date of filing: 31.03.2025
(51) Int. Cl.: H04B 10/2507, H04B 10/50, H04J 14/02

(54) **MITIGATING HOLLOW CORE FIBER GAS LINE ABSORPTION**

(71) Applicant: Microsoft Technology Licensing, LLC, Redmond, WA 98052 (US)
(72) Inventor: KAMALIAN-KOPAE, Morteza, Redmond, 98052-6399 (US); ALI, Abdallah Alsayed Ismail, Redmond, 98052-6399 (US)
(74) Representative: CMS Cameron McKenna Nabarro Olswang LLP

(57) **Abstract**

An apparatus and method for mitigating gas line absorption of a signal transmitted via a hollow core fiber by a transmitter are described. The method comprises initiating generating a signal using a laser and initiating modulating the signal to produce a carved signal, wherein the carved signal comprises a plurality of channels. A spectrum of the carved signal comprises substantially zero signal intensity at a frequency within a gas line absorption profile, the frequency being between a first channel and a second channel of the carved signal. The method further comprises initiating transmission of the carved signal via the hollow core fiber by the transmitter.

## Description

### BACKGROUND

Hollow core fibers are a type of optical fiber that guides light through a central hollow core surrounded by cladding. Such fibers are used in optical communication systems to transmit signals between a transmitter and a receiver.

For example, by generating an electromagnetic carrier wave and modulating the carrier wave based on data to be transmitted, the modulated wave can be transmitted as a signal via a length of hollow core fiber and can be received and demodulated to recover the transmitted data.

The integrity and quality of the signal that is received is an important factor in enabling the transmitted data to be accurately reconstructed.

The embodiments described below are not limited to implementations which solve any or all of the disadvantages of known optical communication systems.

### SUMMARY

The following presents a simplified summary of the disclosure in order to provide a basic understanding to the reader. This summary is not intended to identify key features or essential features of the claimed subject matter nor is it intended to be used to limit the scope of the claimed subject matter. Its sole purpose is to present a selection of concepts disclosed herein in a simplified form as a prelude to the more detailed description that is presented later.

An apparatus and method for mitigating gas line absorption of a signal transmitted via a hollow core fiber by a transmitter are described. The method comprises initiating generating a signal using a laser and initiating modulating the signal to produce a carved signal, wherein the carved signal comprises a plurality of channels. A spectrum of the carved signal comprises substantially zero signal intensity at a frequency within a gas line absorption profile, the frequency being between a first channel and a second channel of the carved signal. The method further comprises initiating transmission of the carved signal via the hollow core fiber by the transmitter.

Many of the attendant features will be more readily appreciated as the same becomes better understood by reference to the following detailed description considered in connection with the accompanying drawings.

### DESCRIPTION OF THE DRAWINGS

The present description will be better understood from the following detailed description read in light of the accompanying drawings, wherein:
FIG. 1A is a schematic diagram of a transverse cross-sectional view of a hollow core fiber;
FIG. 1B is a schematic diagram of an optical communication system comprising a hollow core fiber;
FIG. 2 is a chart illustrating the impact of gas line absorption on a signal transmitted in a system such as the system illustrated in FIG. 1B;
FIGS. 3A and 3B are charts further illustrating the impact of gas line absorption on a transmitted signal, showing intensity across a signal spectrum;
FIG. 4A is a schematic diagram showing channels of a signal, each having a same power allocation, across a signal spectrum overlapping with gas line absorption frequencies;
FIG. 4B is a schematic diagram showing channels of a signal as illustrated in FIG. 4A, but where the channels do not overlap with some gas line absorption frequencies;
FIG. 4C is a schematic diagram showing components of a channel of a signal such as the signal illustrated in FIG. 4A, the components having been generated as individual signals;
FIG. 4D is a schematic diagram showing components of a channel of a signal such as the signal illustrated in FIG. 4A, the components being sub-carriers of a multi-carrier signal;
FIG. 5A is a schematic diagram of a first exemplary transmitter coupled to a hollow core fiber, which may be used to generate the signals illustrated in FIG. 4A-4D;
FIG. 5B is a schematic diagram of a second exemplary transmitter coupled to a hollow core fiber, which may be used to generate the signals illustrated in FIG. 4A-4D.
FIG. 5C is a schematic diagram of a third exemplary transmitter coupled to a hollow core fiber, which may be used to generate the signals illustrated in FIG. 4A-4D;
FIG. 6A is a flow diagram of a method for mitigating gas line absorption;
FIG. 6B is a flow diagram of an example method for mitigating gas line absorption;
FIG. 7 is a schematic diagram of an optical communication system such as illustrated in FIG. 1B, further comprising an apparatus configured to implement embodiments of the gas line absorption mitigation method described herein;
FIG. 8 is a schematic diagram of an exemplary computing-based device in which embodiments of the gas line absorption mitigation method described herein are implemented.
Like reference numerals are used to designate like parts in the accompanying drawings.

### DETAILED DESCRIPTION

The detailed description provided below in connection with the appended drawings is intended as a description of the present examples and is not intended to represent the only forms in which the present examples are constructed or utilized. The description sets forth the functions of the examples and the sequence of operations for constructing and operating the examples. However, the same or equivalent functions and sequences may be accomplished by different examples.

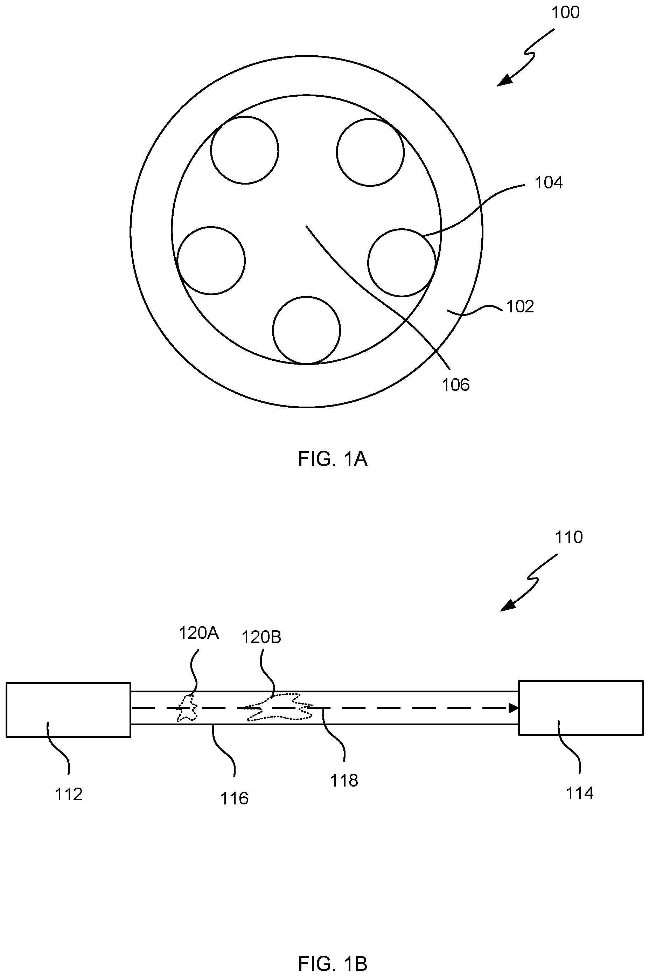

FIG. 1 is a schematic diagram of a transverse cross-sectional view of a hollow core fiber 100. A hollow core fiber (HCF) is a type of optical fiber that guides light through a central hollow core, surrounded by cladding. HCF 100 comprises a hollow core 106, a tubular outer cladding (or jacket) 102, and a structured, inner cladding (referred to herein as microstructure) comprising a plurality of tubular cladding capillaries 104. The outer cladding 102 has a thickness that is typically much larger than that of the cladding capillaries 104 and in many examples is much thicker than shown in FIG. 1A.

Though the microstructure is illustrated as a plurality of capillaries in contact with (e.g. bonded to) the inner surface of the outer cladding 102 at respective azimuthal locations such that the capillaries are evenly spaced and with a gap between neighbouring capillaries, in alternative designs, the capillaries are positioned in contact with each other or with varying spacing. The microstructure of a HCF may also have many possible structures in addition or alternative to the illustrated capillaries, including nested capillaries (i.e. an additional capillary located interior to an outer capillary 104), and/or capillaries with a triangular, teardrop, or other cross-sectional shape.

The arrangement of the capillaries 104 in a ring around the inside of the tubular outer cladding 102 creates a central space, cavity, or void within the fiber, also with its longitudinal axis parallel to those of the outer cladding 102 and the cladding capillaries 104, which is the fiber's hollow core 106. The hollow core 106 is bounded by the inwardly facing parts of the outer surfaces of the cladding capillaries 104. This is the core boundary, and the material (glass or polymer, for example) of the capillary walls that make up this boundary contributes to the optical guidance effect or mechanism. The optical guidance effect is provided by reflections of light in the hollow core by the core boundary, and further reflections of light in the capillary wall by a capillary boundary between a wall of the capillary and an interior space, cavity or void encompassed by the capillary. The cladding capillaries 104 have a thickness, t, at the core boundary which defines the wavelengths for which optical guiding occurs in the HCF.

A HCF as described can be used to guide transmitted light which is coupled into the hollow core 106, and is therefore usable to transmit a signal.

FIG. 1B is a schematic diagram of an optical communication system comprising a hollow core fiber such as the fiber 100 of FIG. 1A. HCF 116 connects a transmitter 112 and a receiver 114, such that an electromagnetic signal (e.g. a light wave) produced by the transmitter 112 can be coupled into the hollow core of the HCF 116, transmitted to and subsequently received by the receiver 114.

A transmitter, as defined herein, is an apparatus that is operable to generate an electromagnetic signal and output the signal. The transmitter is, in the context of an optical communications system, operable to cause the generated electromagnetic signal to be coupled into a hollow core of a connected HCF. In some cases, the transmitter comprises a generation apparatus comprising a laser source, and a modulation apparatus, as will be elaborated upon below.

A receiver, as defined herein, is an apparatus that is operable to receive an electromagnetic signal, and in some cases perform a signal processing operation on the received signal. Such a signal processing operation can include demodulation, filtering, and/or signal conversion.

Because an electromagnetic signal is transmitted between the transmitter 112 and the receiver 114, data can be transmitted between the transmitter 112 and the receiver 114. This is because the transmitter 112 can cause a generated electromagnetic wave to be modulated to produce a generated modulated signal, and then cause modulated signal to be transmitted via the HCF 116. The modulation of the generated wave by the transmitter 112 is controlled by received, by the transmitter, data to be transmitted (i.e. encoded in a transmitted signal). For example, electrical data, which represents or is the data to be transmitted, may be used by the transmitter to directly modulate the generated wave. The data to be transmitted is in various examples analog data, in which case the modulation of the generated wave reflects the analog signal of the data. In other examples the data to be transmitted is digital data, in which case the data represents bits, and the modulation of the generated wave reflects two possible states for a defined time period, each respectively indicating a value of 1 or a value of 0. Modulation refers to modifying one or more properties of an electromagnetic wave (e.g. signal), the properties comprising, for example, a phase, amplitude, frequency, and/or polarization of the wave.

The transmitter 112 generates an electromagnetic wave in various examples by operating a laser source to produce a coherent electromagnetic wave. The coherent electromagnetic wave is modulated upon generation for example by changing an input driving current or voltage of the laser source in accordance with an electrical signal (or electrical data) by the transmitter 112 representing data to be transmitted by the transmitter 112. Alternatively or in addition, the coherent electromagnetic wave is modulated after generation by applying the coherent electromagnetic wave to a thermo-optic material such as a silicon or a polymer, which is operable in response to the electrical signal representing data to be transmitted, to change its refractive index and therefore to modulate a phase and/or amplitude of the impinging electromagnetic wave.

Though in some cases a signal comprising a single modulated electromagnetic wave is transmitted via the HCF 116, in other cases the signal comprises a plurality of modulated electromagnetic waves such that the signal at a given point is associated with a frequency spectrum. This combination of modulated electromagnetic waves in a signal is achieved using multiplexing and by splitting the signal into distinct frequency bands (i.e. channels) each associated with a respective electromagnetic wave which is independently modulated by the transmitter 112.

In response to a modulated signal being produced by the transmitter 112 and coupled into the hollow core of the HCF 116, the modulated signal is guided by and transmitted via the HCF 116, following the path 118 to the receiver 114.

At the receiver 114, the received modulated signal is demodulated to recover the data used to control the modulation of the electromagnetic signal by the transmitter 112. As such, data is transmitted from the transmitter 112 to the receiver 114.

The demodulation of the signal at the receiver 114 can result in errors, being differences between the data used to control modulation at the transmitter 112 and the data recovered by the receiver 114. These errors in some cases occur because of differences between the received signal at the receiver 114 and the transmitted signal by the transmitter 112, for example because of loss associated with the signal over the length of the HCF 116 between the transmitter 112 and receiver 114, due to damage to microstructure of the HCF caused during laying of the fiber or resonance effects within the HCF. As advances in techniques for low-loss HCFs have been developed, longer HCFs and/or lengths of HCF with lower losses have become more feasible to use in optical communication systems such as in system 110, than previously.

However, a signal also experiences degradation, especially pertinent to accurate recovery of data through demodulation at receiver 114 at high HCF lengths of 100 kilometers or more, due to gas line absorption effects. The hollow core of HCF 116 comprises regions of gas 120A, 120B, through which the modulated signal transmitted along the path 118 passes. The regions of gas 120A, 120B in some cases comprise same gas species and in other cases comprise different gas species. It should be appreciated that, although the regions of gas 120A, 120B are illustrated as distinct volumes of gas, in various examples gas volumes having different dimensions to those illustrated are present within the hollow core of a HCF. For example, a majority or even a totality of the hollow core may comprise a volume of gas.

Gas is present within HCFs for a number of reasons. Damage to a HCF, for example fractures in the outer cladding or to an end face, during splicing to connect two lengths of HCF into a longer length of HCF, can result in gas ingress from the surrounding environment. Additionally, a manufacturing process of a HCF can result in gas being present within a hollow core of the manufactured HCF, such as where a perfect vacuum in the core is targeted but is not created, and where gas is introduced to the hollow core from the surrounding atmosphere.

Examples of gases that are in various cases present within a hollow core of a HCF include: carbon dioxide, ammonia, carbon monoxide, nitrogen, methane and acetylene, water vapor, and any other gas that is present in air.

Gas present in a hollow core of a HCF, e.g. HCF 116, results in a degradation of the modulated signal transmitted through the gas because the gas absorbs energy from the modulated signal at a specific range of frequencies, and therefore reduces an amplitude of the modulated signal within the specific range of frequencies. In some cases, such as where a density of gas over the path of the signal is high, the specific range of frequencies is removed from the modulated signal transmitted by the transmitter 112 by the time the modulated signal is received by the receiver 114. As such, there is less information available at the receiver regarding properties of the modulated signal, which means that demodulation is more challenging and can result in inaccuracies and even missing data in the reconstructed data at the receiver 114, relative to the data used to construct the modulated signal at the transmitter 112. Even where the signal transmitted by the transmitter 112 is not modulated, an amplitude and an effective power of the signal at the receiver 114 is reduced by gas line absorption.

Typically, an electromagnetic signal having a frequency in the visible light or infrared range is used for optical fiber communications, such as a frequency of approximately 1-1000 THz. The frequency of the electromagnetic signal is chosen, for example, such that the signal is reflected and guided as desired along a hollow core optical fiber without being transmitted transversely and away from the hollow core. The frequency range of the transmitted signal via the HCF 116 therefore overlaps, in this case, with a gas line absorption frequency associated with carbon dioxide of 190.6 THz (it should be appreciated that carbon dioxide has additional different gas line absorption frequencies). It should further be appreciated that even where different frequencies of electromagnetic signal are modulated and transmitted via the HCF 116, gas line absorption still in various examples occurs due to the presence of gases other than carbon dioxide within the HCF 116.

As defined herein, a gas line absorption frequency is a central frequency of a gas line absorption profile of a gas, which is a profile defined by the frequencies at which the gas absorbs energy from an impinging electromagnetic wave and therefore causes an amplitude of the impinging wave to decrease. Though the magnitude of the gas line absorption profile of a gas depends on the amount of the gas encountered by and affecting the wave along its path, the shape of the profile and the gas line absorption frequency for a gas are consistent quantities, and may be known such as from a database of gas line absorption frequencies and/or profile shapes.

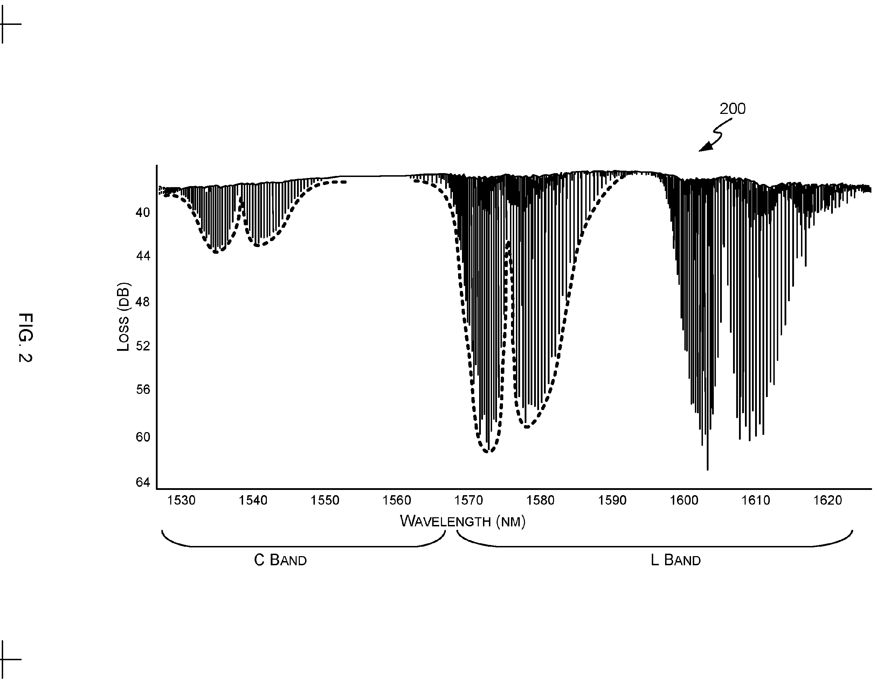

To further illustrate the impact of gas line absorption on a signal transmitted via a HCF comprising a gas, for example the impact of gas line absorption (GLA) on a signal transmitted via the path 118 in optical communication system 110, FIG. 2 will now be described.

FIG. 2 is a chart 200 showing a wavelength of a wave that is transmitted via a HCF, in nm, against a loss in dB of the wave due to gas line absorption in the HCF by carbon dioxide. The chart depicts the impacts of gas line absorption across the L-band (long band) having a wavelength range of approximately 1565 - 1625 nm, and across the C-band (conventional band) having a wavelength range of approximately 1530 - 1565 nm. The C-band and L-band are defined for optical fiber transmission.

It is desirable that at each wavelength and therefore frequency of an electromagnetic wave transmitted via a HCF, there is a same loss over the length of the HCF, because the modulated signal used for transmission in optical communication systems comprises in some cases multiple frequency components each being an electromagnetic wave with a respective frequency. Differing losses between each frequency component of the modulated signal means that demodulation is more challenging and that errors are likely to be introduced between recovered data at a receiver and data used to generate the modulated signal at a transmitter. Additionally, it is desirable that a loss over the path of the signal via the HCF is minimal, so that a signal-to-noise ratio of the signal at the receiver is as high as possible.

As shown, gas line absorption results in undesirable effects on a signal transmitted via a HCF for optical communications. The dotted lines represent gas line absorption profiles with respective gas line absorption frequencies associated with carbon dioxide. Illustratively, wavelengths of 1530-1545 nm, for example, have higher associated losses than wavelengths of 1555-1560nm. Wavelengths of 1570-1580nm have even higher associated losses. As such, a signal comprising a frequency component being an electromagnetic wave with a wavelength of 1575nm (thus a frequency of 190.3 THz) would experience a higher loss, when travelling via a path through a HCF that impinges upon a region of carbon dioxide gas, than a frequency component, of the signal, being an electromagnetic wave with a wavelength of 1535nm (thus a frequency of 195.3 THz). The signal would therefore be negatively impacted by gas line absorption by carbon dioxide.

Though C-band and L-band transmission via a HCF and carbon dioxide gas line absorption frequencies have been described, in various examples different signal frequencies are used and experience gas line absorption effects due to different gases present within the HCF and/or different gas line absorption frequencies.

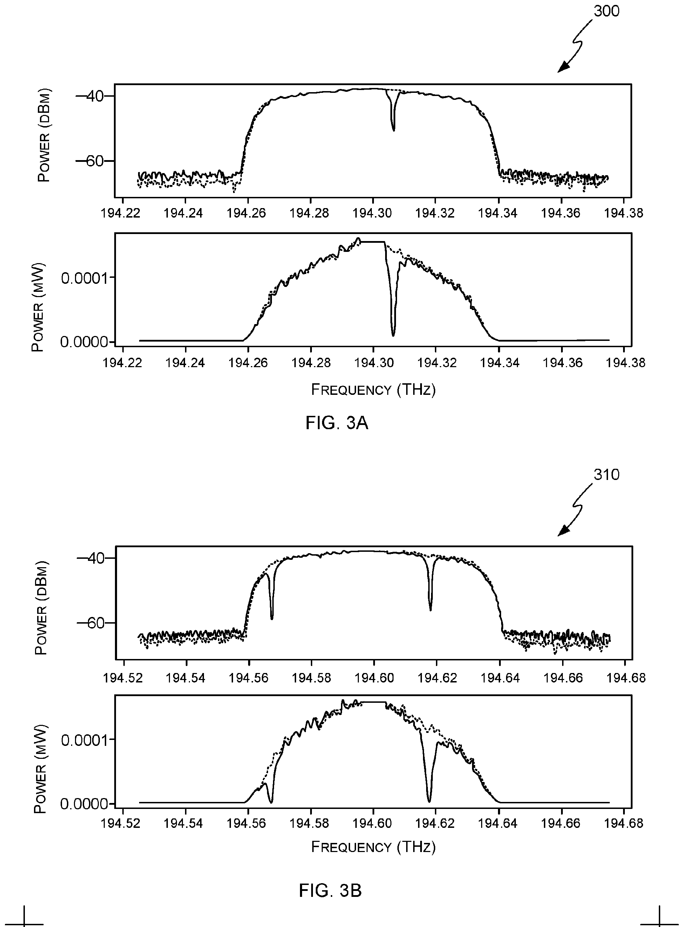

FIGS. 3A and 3B are charts 300, 310 further illustrating the impact of gas line absorption on a transmitted signal via a HCF, such as HCF 116 of FIG. 1B. The dotted line in both charts corresponds to a signal transmitted by a transmitter such as transmitter 112 of FIG. 1B, and the solid line in both charts represents a signal received by a receiver such as receiver 114 of FIG. 1B.

Within each chart 300, 310, the upper sub-chart shows the intensity of the respective signals , i.e. power of the respective signals, in units of decibel-milliwatts (dBm), and the lower sub-chart shows the intensity of the respective signals on a linear scale in milliwatts (mW).

A single channel of the signal is illustrated in each of charts 300 and 310, the channel of chart 300 having frequencies from approximately 194.26 THz to 194.34 THz, i.e. the channel having a bandwidth of approximately 80 GHz. The channel of chart 310 has frequencies from approximately 194.52 THz to 194.68 THz. As such, the signal corresponding to the charts 300 and 310 comprises an electromagnetic wave which is modulated to have, over time, frequencies within the frequency range of the channel (194.26 - 194.34 THz or 194.52 - 194.68 THz, respectively). The signal is transmitted via a HCF, as described with respect to FIG. 1B, the HCF comprising a gas which has a GLA frequency within the frequency range of the channel. The charts 300 and 310 illustrate a spectrum of the signal. Though a single channel of a signal is illustrated, in various examples a signal comprises a plurality of channels, wherein one or more of the channels overlap with a GLA frequency.

As illustrated, the GLA causes the spectrum of the received signal to have a notch i.e. a drop in intensity at a frequency corresponding to the GLA frequency of the gas within the HCF. As such, the received signal at a receiver comprises a frequency component having a frequency corresponding to the GLA frequency of the gas with a lower amplitude than the same component during transmission at a transmitter. This can make demodulating the signal challenging because the frequency components of the signal are not equally affected by the transmission. Reconstruction of the transmitted modulated signal and therefore the data used to control the modulation at the transmitter is therefore challenging.

Additionally, in cases where the GLA causes a significant drop in intensity, information about a frequency component affected by the GLA can be lost completely, especially where noise introduced by the transmission system results in a signal-to-noise ratio at the receiver that is too high to demodulate and recover the original transmitted data with a threshold accuracy.

FIG. 3A shows a single GLA profile, whereas FIG. 3B shows two GLA profiles. In both cases, GLA impacts the spectrum of a transmitted signal by the time the transmitted signal is received. Though a single GLA profile and two GLA profiles, with respective GLA frequencies, have been illustrated, it should be appreciated that in various examples three, four, seven, ten or any other number of GLA profiles impact the spectrum of a transmitted signal, based on the bandwidth of the transmitted signal. As briefly mentioned above, the specific GLA profiles affecting a spectrum of a signal, and specifically of a modulated signal, depend upon the gases present in a HCF and that are impinged upon by the signal transmitted via the HCF (and subsequently received at a receiver).

Described herein is a method for mitigating gas line absorption of a signal transmitted via a hollow core fiber by a transmitter, which may be used in an optical communication system comprising a HCF to improve a quality of a signal and reduce a number of errors when a modulated signal is demodulated. Especially, as low-loss hollow core fibers have been developed, enabling longer-length HCFs than were previously available, the impact of GLA on a signal transmitted via the longer-length HCFs is non-negligible and substantially affects a quality of the signal and therefore an accuracy of demodulation. Mitigating the impact of the GLA therefore enables signal transmission for optical communications with a greater accuracy and/or over a longer length of HCF.

The method comprises initiating generating a signal using a laser and initiating modulating the signal to produce a carved signal, wherein the carved signal comprises a plurality of channels. A spectrum of the carved signal comprises substantially zero signal intensity at a frequency within a gas line absorption profile, the frequency being between a first channel and a second channel of the carved signal. This means that a frequency of a GLA profile is within a gap in a spectrum of the carved signal between a first channel and a second channel of the carved signal. By generating and modulating a signal to produce a signal which avoids a frequency that would otherwise be present in the signal spectrum and at which GLA would attenuate a signal component, the impact of GLA on the signal is mitigated. Though a gap in the spectrum between a first and second channel are described, the first and second channel are in various examples first and second sub-channels, respectively. In some cases, the first and second sub-channels are of a same channel.

The method further comprises initiating transmission of the carved signal via the hollow core fiber by the transmitter. In this way, when the signal is transmitted and received (i.e. during normal use of an optical communication system comprising the transmitter and the receiver), the impact of GLA on the transmitted signal is mitigated. When the transmitted signal is received, an integrity of the signal is therefore improved compared to a case where the transmitted signal spectrum overlaps with the gas line absorption frequency.

Examples of how the generation and modulation of the signal can produce a carved signal that avoids a GLA frequency will now be described.

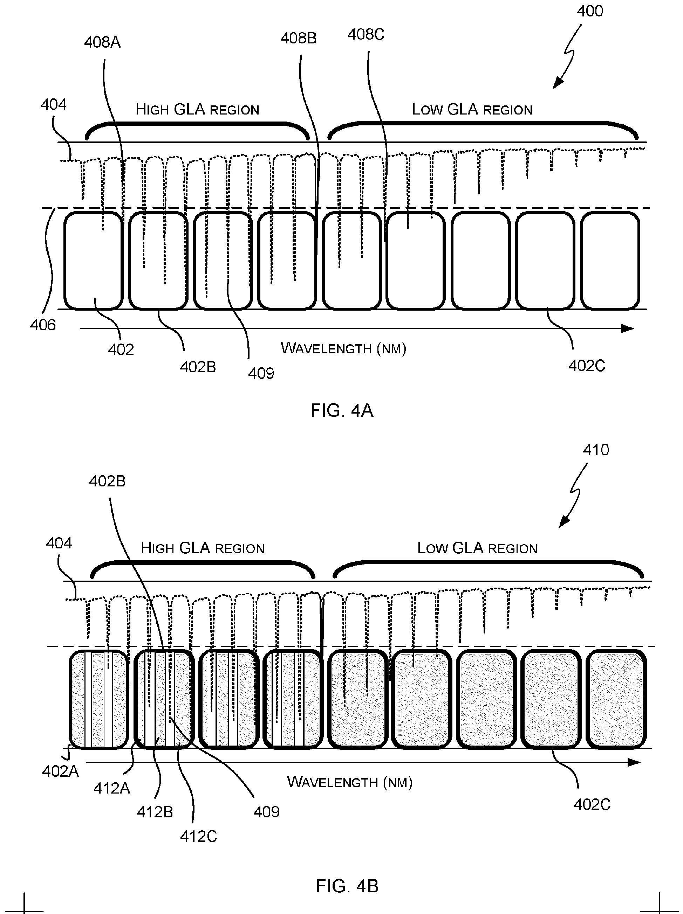

FIG. 4A is a schematic diagram 400 showing a spectrum of a modulated signal that is transmitted via a HCF, the signal comprising a plurality of channels 402A-C. Each channel has a same power allocation, represented by a height of the channels 402A-C. Additionally, each channel 402A-C has a same bandwidth, where the width of each channel 402A-C as illustrated corresponds to a respective wavelength (and therefore frequency) range of the channel 402A-C. In some cases a signal component of the modulated signal has a frequency that is modulated within a respective channel, however, in other cases, the signal component has a substantially constant frequency within the respective channel and has a property different to its frequency, e.g. phase and/or amplitude, that is modulated.

Line 404 illustrates an impact of GLA on a transmitted spectrum, where each deep trough represents a decrease in an amplitude of a transmitted signal at a corresponding frequency due to GLA by a gas in the HCF. As illustrated, there are a plurality of GLA frequencies which overlap with a channel 402A-C. Because the transmitted signal comprises electromagnetic waves each being modulated within boundaries of a respective channel, the signal comprises frequency components which are affected by GLA, because the signal impinges upon the gas in the HCF during transmission via the HCF.

Especially, high-frequency channels (therefore, short wavelength channels, e.g. channel 402B) towards the left side of the chart are impacted, on average, more than higher-frequency channels (e.g. channel 402C) towards the right side of the chart, because the GLA profiles at high frequencies in the modulated signal spectrum are deeper (i.e. have a higher magnitude) than GLA profiles at lower frequencies in the modulated signal spectrum. For example, GLA profile 409 impacts channel 402B.

In various examples, a signal is generated and/or modulated such that the channels of the signal (e.g. channels 402A-C) have associated frequencies (e.g. central frequencies and/or bandwidths) that avoid a frequency within a GLA profile, in some cases being a GLA frequency, that would otherwise overlap with the channel. In some cases, an entire GLA profile is avoided. For example, GLA profiles 408A-C are located at GLA frequencies within respective gaps in the signal spectrum between two channels. This means that GLA associated with GLA profiles 408A-C does not attenuate a frequency component of a channel of the signal, maintaining an integrity of the signal during transmission.

As defined herein, a frequency within a GLA profile being within a gap in a spectrum of a signal between a first and second channel or sub-channel refers to and is used interchangeably to define that a spectrum of the signal comprises substantially zero signal intensity at a frequency within a GLA profile, the frequency being between the first and second channels or sub-channels. Substantially zero signal intensity encompasses zero signal intensity and also an intensity of a portion of a spectrum which is not used for any function of the signal. For example, an intensity may be present within a spectrum, such as a small intensity e.g. due to noise, but a frequency component of the signal with that intensity is not used for encoding data to be demodulated or used for any side-operation such as clock-recovery. In this case, the intensity is referred to as substantially zero signal intensity, because the intensity would not make a difference to the functionality of the signal as compared with an intensity of zero at the frequency.

In addition or alternatively to the channels of a signal being generated and/or modulated so as to avoid (i.e. not overlap with) a frequency within a GLA profile, in various examples a particular channel itself is generated and/or modulated such that the channel avoids a frequency within a GLA profile.

FIG. 4B is a schematic diagram 410 illustrating a result of such generation and/or modulation of a channel. Diagram 410 illustrates the same channels of a signal as diagram 400 of FIG. 4A, being located at same central frequencies and having same bandwidths, but wherein some of the channels are generated and/or modulated differently.

Channel 402B, corresponding to channel 402B of FIG. 4A, which overlaps with a GLA frequency, is subdivided into three sub-channels 412A, 412B, 412C. The sub-channels 412A, 412B, 412C are located within the channel 402B such that a GLA frequency associated with GLA profile 409 is located in a gap in the signal spectrum between sub-channel 412B (and/or sub-channel 412A) and sub-channel 412C. In this way, an impact of GLA on the channel 402B is mitigated, because a signal component of the channel 402B is modulated within the sub-channels 412A-C which do not overlap with a frequency within a GLA profile.

Though nine channels and three sub-channels in channel 402B have been described, it should be appreciated that in various examples, a signal comprises one, two, four, ten, or any other number, being one or more, of channels, and that in various examples a channel comprises one, two, four, ten or any other number, being one or more, of sub-channels.

A sub-channel as defined herein defines a range of frequencies which a signal component is (or is permitted to be) modulated to. A plurality of sub-channels of a same channel are associated with a same carrier wave, i.e. an electromagnetic wave which is generated and modulated for transmission. For example, a carrier wave associated with channel 402B of FIG. 4A is modulated within a first range of frequencies to represent different states, each state representing a data element. A carrier wave associated with channel 402B having sub-channels 412A-C is modulated within a second range of frequencies which is smaller than the first range of frequencies.

In some cases, a carrier wave is a multi-carrier wave, which is a carrier wave comprising a plurality of sub-carrier waves each having a frequency that is modulated within an associated channel, such that the multi-carrier wave as a whole is modulated within the boundaries of the associated channel. A multi-carrier wave may be generated and modulated via a number of different methods, including for example Orthogonal Frequency Division Multiplexing (OFDM).

Where a channel associated with a multi-carrier wave comprises a sub-channel, the sub-channel defines a range of frequencies within which sub-carrier waves of the multi-carrier wave are modulated.

In some cases, a sub-channel is associated with a carrier wave of its own, for example such that channel 402B comprises sub-channel 412A associated with a first carrier wave, sub-channel 412B associated with a second carrier wave, and sub-channel 412C associated with a third carrier wave. In this way, the channel 402B still defines a range of frequencies within which the first, second and third carrier waves are modulated (so a receiver may still know where, broadly, to expect a frequency component of the signal), but the first, second and third carrier waves are further limited in their modulated frequencies by the boundaries of respective sub-channels 412A-C.

A carrier wave (and a modulated carrier wave), and a sub-carrier wave (and a modulated sub-carrier wave) are each defined herein as a signal component.

Though sub-channels 412A-C of channel 402B have been described with reference to diagram 410, a plurality of channels including channel 402A also comprise sub-channels. However, a plurality of channels including channel 402C do not comprise a sub-channel. Alternatively, a plurality of channels including channel 402C comprise sub-channels not having any gaps between them such that an entire bandwidth of a respective channel overlaps with bandwidths of respective component sub-channels. In various examples, a computation as to whether a signal should be generated and/or modulated such that a channel comprises or does not comprise (or comprises sub-channels not having gaps between them) a sub-channel is performed based on the magnitude of GLA at a frequency within a GLA profile, the frequency being proximate to the channel. For example, in response to a frequency within a channel being a frequency within a GLA profile, a signal is generated and/or modulated such that the signal comprises the channel which further comprises a sub-channel. The sub-channel has a frequency (e.g. central frequency and band-width) such that it avoids the frequency within the channel and within the GLA profile. Where a channel does not overlap with a frequency of a GLA profile, the channel may not be caused to comprise a sub-channel.

As defined herein, a frequency being within a GLA profile refers to the frequency being defined by the GLA profile of a gas as a frequency at which GLA by the gas affects a signal impinging upon the gas. As such, a frequency component of a signal having a frequency within a GLA profile has its amplitude reduced in response to impinging upon the gas.

Similarly, for example, in response to a frequency within a channel being a frequency within a GLA profile with an associated magnitude of the GLA profile at the frequency which is greater than a threshold magnitude, a signal is generated and/or modulated such that the signal comprises the channel which further comprises a sub-channel. The sub-channel has a frequency (e.g. central frequency and band-width) such that it avoids the frequency within the channel and within the GLA profile. Where the associated magnitude of the GLA profile at the frequency is smaller than the threshold magnitude, the channel may not be caused to comprise a sub-channel.

Especially, maintaining a channel (e.g. channel 402C) without a sub-channel in response to a magnitude of a GLA profile at a frequency within the channel 402C being below a threshold magnitude, maintains a broader range of possible frequencies that a signal component may be modulated to than if the channel 402C comprised a sub-channel. This facilitates a higher effective signal-to-noise ratio associated with the channel 402C at an output of a receiver after demodulating the signal comprising the channel 402C because it is easier for the receiver to reconstruct the channel 402C than a channel comprising a sub-channel (e.g. channel 402A, 402B). This is because a frequency component of the signal may occupy a wider range of frequencies within the channel 402C than within the channel 402A, 402B, thus the modulation state of the frequency component can be distinguished from other possible modulation states more easily and therefore be computed more accurately.

As mentioned above, a plurality of sub-channels of a channel may each be associated with an own carrier wave.

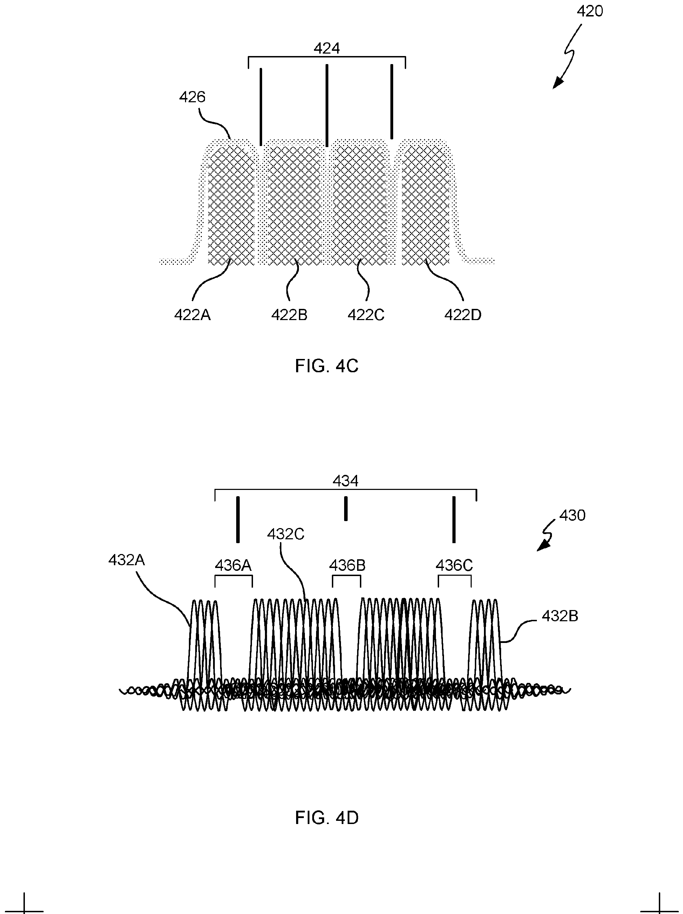

FIG. 4C is a schematic diagram showing a channel 420 of a signal which has been generated and/or modulated such that the channel of the signal comprises four sub-channels 422A-D. Each sub-channel is located (i.e. has an associated central frequency and band-width) such that frequencies 424 within a GLA profile are avoided. Frequencies 424 each within a respective GLA profile are indicated by solid vertical lines, and as illustrated correspond to different GLA frequencies, though it should be appreciated that in some cases the frequencies avoided are not GLA frequencies and are other frequencies within respective (in some cases same) GLA profiles.

Line 426 represents an intensity of the spectrum of the signal comprising the sub-channels 422A-D. A signal component is modulated within the channel 420. In some cases, a signal component is modulated within the channel 420 with a same amplitude at frequencies within a sub-channel 422A, 422B, 422C, 422D, therefore the intensity of the signal spectrum within the sub-channels 422A-D is evenly distributed. A channel or sub-channel of a signal may therefore be produced by modulating a component of the signal (i.e. a signal component) within the boundaries of the channel or sub-channel. The boundaries of each of a plurality of channels or sub-channels in various examples do not overlap.

The signal comprising channel 420 may comprise four frequency components, each having a frequency (and being modulated over time) within a respective one of the sub-channels 422A-D. Alternatively, the signal comprising channel 420 may comprise a single frequency component, having a frequency within the sub-channels 422A-D, and wherein modulating the single frequency component over time may result in a frequency of the frequency component changing from being within a first sub-channel to being within a second sub-channel of the sub-channels 422A-D. It should be appreciated that any number of frequency components of a signal have in various examples frequencies within one or more of the sub-channels 422A-D.

An intensity of the signal spectrum drops outside of the sub-channels 422A-D, for example dropping to substantially zero at gaps (in frequency, meaning that a signal component does not have a frequency that is within the gap) between: a first sub-channel 422A and a second sub-channel 422B, a first sub-channel 422B and a second sub-channel 422C, a first sub-channel 422C and a second sub-channel 422D, a first sub-channel 422A and a second sub-channel 422C, and a first sub-channel 422B and a second sub-channel 422D.

In some cases, a roll-off factor of a channel (or sub-channel) of a signal is adjustable. A roll-off factor of a channel (or sub-channel), as defined herein, refers to a value which represents an excess bandwidth of the channel beyond a Nyquist bandwidth for a given symbol rate of the channel, which is half of the given symbol rate. The Nyquist bandwidth is a minimum bandwidth required to transmit symbols without causing inter-symbol interference. The roll-off factor has a value between zero and one inclusive. A value of zero defines that the bandwidth of the channel corresponds to a Nyquist pulse, such that a given number of symbols are encoded within the channel per second without inter-symbol interference and with a minimum bandwidth of the channel. This means that a spectrum of the signal over the channel is rectangular, with an immediate drop in intensity at the boundaries of the channel relative to an intensity within and over the channel.

A value of the roll-off factor of zero defines that the bandwidth of the channel is twice the Nyquist bandwidth.

By increasing a roll-off factor of a channel (or sub-channel), excess bandwidth is introduced to the channel and the spectrum of the signal comprising the channel becomes more gently sloped towards the boundaries of the channel. There is therefore more separation between frequency components within the channel, making demodulation of the frequency components to recover a symbol and therefore data used to modulate the frequency components able to be more easily performed.

In this way, the roll-off factor of a channel defines a region of frequencies around the channel which are present (i.e. there is an intensity at the frequencies) in the spectrum of the signal. A smaller roll-off factor of a channel/sub-channel of a signal results in a spectrum of the signal which more steeply reduces in intensity over frequencies away from the boundaries of the channel/sub-channel, than a spectrum of a channel/sub-channel of the signal with a higher roll-off factor.

As illustrated in FIG. 4C, sub-channels 422A and 422D have higher roll-off factors (such as a roll-off factor within the range of 0.2 to 1) than sub-channels 422B and 422C. Sub-channels 422B and 422C have small roll-off factors such as within the range of for example 0 to 0.2.

Using a channel/sub-channel with a small roll-off factor defines a range of possible frequencies of frequency components of the channel/sub-channel to be located more closely to each other than if a larger roll-off factor was used. A possible spectrum of a signal comprising the adjacent channels/sub-channels is therefore more utilized for data encoding. Particularly, transmission via a HCF enables accurate transmission of signals representing symbols with closer state spacing and comprising channels with smaller roll-off factors than transmission of the signals via a solid-core fiber. This is because non-linear effects on the signal are reduced in HCFs, such as four-wave mixing (FWM), self phase modulation (SPM), and cross phase modulation (XPM) noise, and distortion of the signal, relative to in solid-core fibers.

However, in some cases, a channel/sub-channel is configured with a larger roll-off factor, such as where the channel/sub-channel is used for a side-operation. A side-operation is an operation that is not demodulation to recover data which is encoded in a signal. Examples of side-operations include synchronization, equalization, control, baud-rate estimation, clock recovery, phase recovery and/or frequency recovery operations.

A higher roll-off factor reduces inter-symbol interference and therefore increases an ease with which a receiver for example can demodulate the signal, and/or an accuracy with which the receiver can demodulate the signal.

By configuring the roll-off factor of a sub-channel 422A, 422D further towards an outer boundary of a channel 420 to be higher than an interior sub-channel 422C, 422B with a lower roll-off factor, a roll off factor of the channel (i.e. taking into account maximum and minimum frequencies) is optimized for reduced inter-symbol interference. The interior sub-channels 422C, 422B are optimized for bandwidth utilization. This configuration is especially applicable in cases wherein an outer sub-channel 422A, 422D of the channel 420 is used for a side-operation (i.e. a frequency component within the outer sub-channel 422A, 422D is used for the side-operation). Additionally, a higher roll-off factor of a channel means that a frequency within a GLA profile is more difficult to precisely avoid in the spectrum of a signal, than a lower roll-off factor which enables closely spaced sub-channels which precisely avoid a frequency within a GLA profile.

However, it should be appreciated that in some cases one or more sub-channels are configured to have a higher roll-off factor than one or more other sub-channels, and that the sub-channels with a higher roll-off factor are in various examples located closer to an outer boundary of a channel 420 than the other sub-channels.

As mentioned above, the sub-channels 422A-D may be associated with for example different carrier waves, or sub-carriers of a multi-carrier wave or signal.

FIG. 4D is a schematic diagram showing components of a channel 430 of a signal, the components comprising sub-carrier ranges 432A, 432B, 432C of a multi-carrier signal. Each sub-carrier in frequency ranges 432A, 432B, 432C is orthogonal to each other sub-carrier. During generation and modulation of the signal 430, for example using OFDM, sub-carriers within frequency ranges 436A, 436B, and 436C are excluded from being comprised in the signal 430. The frequency ranges 436A-C correspond to frequencies which are within a GLA profile, as indicated by GLA frequencies 434. As such, multi-carrier signal channel 430 avoids a plurality of frequencies within a GLA profile, avoiding an impact of GLA at the respective frequencies on the channel 430 of the signal.

As defined herein, a gap in a spectrum of a signal encompasses a portion of the spectrum over which an intensity of the spectrum is substantially zero, and a portion of the spectrum which is not used to encode data to be demodulated from the signal. For example, though the signal channel 430 does provide some small intensity over frequency ranges 436A-C, there is not a frequency component of the signal within those ranges that is demodulated, therefore a spectrum of the signal comprising the channel 430 would have a gap in the spectrum over frequency ranges 436A-C.

Excluding sub-carriers from a multi-carrier signal to provide gaps in a spectrum of the multi-carrier signal provides a precise way of avoiding a frequency 434 within a GLA profile. This is because an effective roll-off factor of the sub-carriers of the multi-carrier signal channel 430 is low relative to, for example, the roll-off factors of the outer sub-channels 422A, 422D of FIG. 4C wherein a separate carrier wave is used to generate the sub-channels 422A, 422D.

Techniques, signal properties, and methods of causing a signal for transmission to avoid a frequency within a GLA profile by generating and/or modulating a signal have been described thus far. These techniques and properties enable mitigation of an impact of GLA on the signal when transmitting the signal via a HCF.

Examples of apparatus and methods of generating and modulating a signal with the desired properties will now be described.

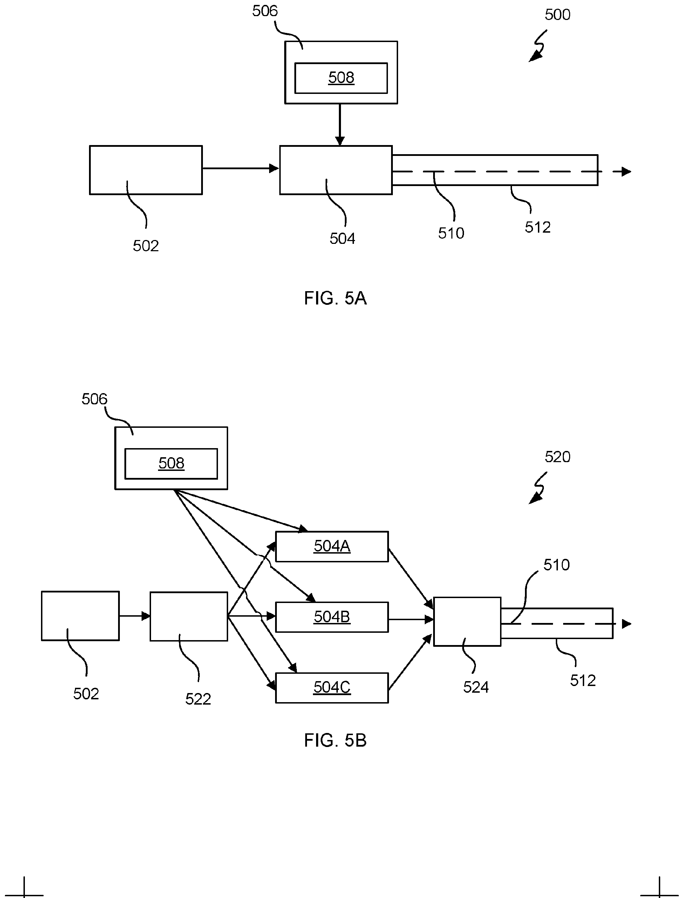

FIG. 5A is a schematic diagram of an exemplary system 500 comprising a transmitter coupled to a hollow core fiber 512. System 500 comprises a laser 502 (in various examples comprised in a generation apparatus), and a modulation apparatus 504. System 500 further comprises a digital-to-analog converter (DAC) 506, which is configured to receive or retrieve stored data 508 and generate an analog signal representing the data 508. In response to the stored data comprising bit values, a bit stream is configured to be generated using the stored data 508 and received by the DAC 506, which is further configured to generate an analog signal which for example is modulated between two states. One state of the analog signal represents a bit value of 0, and the other state represents a bit value of 1.

The analog signal generated by the DAC 506 is provided to the modulation apparatus 504.

Laser 502 is configured to generate a signal which is used as a carrier wave. The carrier wave is a signal component and is provided to modulation apparatus 504.

Modulation apparatus 504 is configured to receive the carrier wave and the analog signal, and to modulate the carrier wave in response to the analog signal, such that the analog signal controls the modulation of the carrier wave by the modulation apparatus 504.

Modulation apparatus 504 is then configured to couple the resulting modulated signal into the HCF 512 via the path 510.

By configuring a parameter of the laser 502, properties of the carrier wave (and therefore of the modulated signal which is transmitted via the HCF 512) may be varied. For example, a driving current provided to the laser may be adjusted to cause a frequency and/or amplitude of the carrier wave produced by the laser to be varied. The modulated signal produced by the modulation apparatus 504 therefore may be configured as desired. For example, a frequency of a carrier wave produced by the laser is configured to be a frequency which does not correspond with a frequency of a GLA profile.

Additionally or alternatively, by configuring a parameter of the modulation apparatus 504, properties of the modulated signal may be varied. For example, a frequency, modulation format, and/or amplitude of the modulated signal may be varied, such that a frequency within a GLA profile which overlaps with the spectrum of the carrier wave and that would otherwise overlap with the modulated signal, is avoided.

A single carrier wave generated by laser 502 may be modulated by modulation apparatus 504 to produce a multi-carrier signal which is coupled into the HCF 512, in accordance with the signal properties and techniques described herein. The single carrier wave may be generated such that it comprises frequency components covering an entire channel bandwidth. The multi-carrier signal may be generated and/or modulated to have a gap between two channels or sub-channels in a spectrum of the multi-carrier signal, wherein a frequency within a GLA profile is located within the gap.

Laser 502, modulation apparatus 504, and/or DAC 506 are in various examples comprised in a transmitter.

FIG. 5B is a schematic diagram of a second exemplary system 520 comprising a transmitter coupled to the hollow core fiber 512, and which may be used to generate the signals illustrated in FIG. 4A-4D.

System 520 comprises the laser 502, and additionally a frequency comb generator 522. The laser 502 and frequency comb generator 522 may be comprised in a generation apparatus. In various examples, the laser 502 acts as a frequency comb generator 522.

Frequency comb generator 522 generates a frequency comb, which is a spectrum, being a plurality, of discrete frequency components of a signal. The laser 502 is configured to be operable to cause a frequency comb to be produced by the frequency comb generator 522. Each of the frequency components of the frequency comb are configured to partially cover a bandwidth of a single signal channel. Frequency comb generator 522 may stabilize a sequence of pulses of laser 502 which is in an example a mode-locked laser, to produce the frequency comb.

Each frequency component (or each of pluralities of frequency components), produced by the frequency comb is usable as a carrier wave, and is independently provided to a respective modulation apparatuses 504A-C. The modulation apparatuses 504A-C provide frequency components of a single channel, wherein each frequency component is modulated within a respective sub-channel.

The DAC 506, in this case, provides an analog signal to each of the modulation apparatuses 504A-C, which is used to control the modulation of the respective carrier waves received by each modulation apparatus 504A-C.

In some cases, such as wherein a signal to be transmitted is targeted to have a plurality of sub-channels each having a respective associated carrier wave which is modulated independently to produce a signal spectrum across a channel comprising the plurality of sub-channels, an analog signal is provided by the DAC 506 to each modulation apparatus 504A-C. In some cases, different analog signals are provided by the DAC 506 to each modulation apparatus 504A-C. The DAC 506 produces an analog signal using bits of a bit stream generated from, for example, stored data 508.

For example, a digital signal indicating subsequent bits of a bit stream is received by the DAC 506 and divided into a plurality of sub-streams. The plurality of sub-streams each comprise at least one bit of the bit stream. Each of the plurality of sub-streams is converted into an analogue signal by the DAC 506, and subsequently sent to a respective modulation apparatus 504A-C. Each modulation apparatus is configured to modulate it's respective received carrier wave, for example in amplitude and/or frequency, responsive to the state of its received analog signal (i.e. to change parameters of the modulation by the modulation apparatus to values which depend on the parameters of the received analog signal). Each modulation apparatus 504A-C therefore generates a modulated signal component.

It should be appreciated that in some cases the modulation apparatus 504A, 504B, 504C is comprised in or refers to the laser 502, for example wherein a digital signal representing stored data is provided to the laser 502 and used to control a driving current which therefore modulates the signal generated by the laser and by the frequency comb apparatus. Additionally, in some cases there are two, three, four, five, ten, or any other number of modulation apparatuses that are implemented in the system 520.

System 520 further comprises a power combiner 524, which is configured to receive the modulated signals produced by modulation apparatuses 504A-C, and combine them to produce a single signal, which is subsequently coupled into the HCF 512 and transmitted via path 510. A receiver may be arranged to receive the signal transmitted via path 510, and demodulate it to recover the bit stream used to generate the signal. Laser 502 is optionally referred to as a master laser, being associated with a plurality of frequency components, because the master laser drives the generated frequency comb by system 520.

In various examples, an indication of a parameter of the transmitter is provided to a receiver configured to receive a signal transmitted by the transmitter, for use by the receiver to demodulate the signal.

The use of a frequency comb and modulation apparatuses 504A-C to generate a signal comprising a plurality of channels or a plurality of sub-channels has been described. Especially, a frequency comb is capable of generating many frequency components, such as 2, 4, 6, 8, 9, 10 or more. A channel is therefore subdividable into many sub-channels, enabling many frequencies within GLA profiles that would otherwise affect the channel to be avoided by configuring the sub-channels appropriately.

A central frequency and bandwidth of a channel are adjustable for example by configuring the frequency comb generation apparatus 522 to generate a frequency comb with specific frequency components, by filtering out unwanted frequency components that the frequency comb generates, and/or by configuring the modulation apparatuses 504A-C to modulate their received frequency components in response to respective analog signals from DAC 506 in a specific way. For example, modulation apparatus 504A may be configured to be limited in a maximum frequency modulation that it may apply to its received carrier wave in accordance with a desired bandwidth of the sub-channel that is produced by the modulation apparatus 504A.

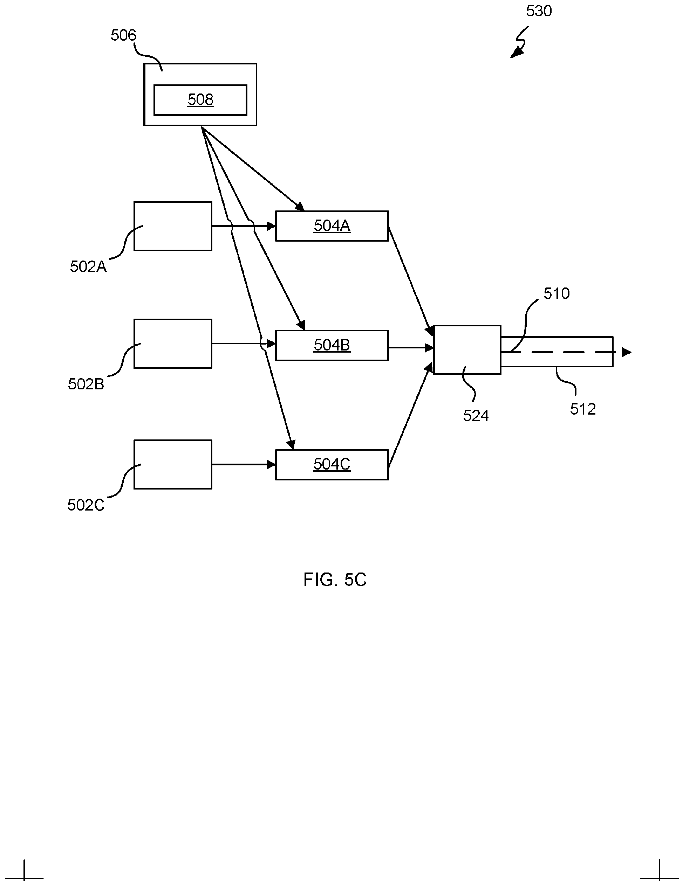

FIG. 5C is a schematic diagram of an alternative system 530 to the system 520 of FIG. 5B. System 530 may be used to generate the signals illustrated in FIG. 4A-4D.

Instead of a laser configured to cause a frequency comb to be generated, system 530 comprises a plurality of lasers 502A-C. Each of the lasers is phase-locked, and is configured to generate a carrier wave for a specific sub-channel. Each laser provides its respective generated carrier wave to a respective modulation apparatus 504A-C, which is controlled, as described with reference to FIG. 5B, by an analog signal. The analog signal is produced by a DAC 506, using data 508.

The modulated signals produced by each modulation apparatus 504A-C, the modulated signals being frequency components of respective sub-channels, are then provided to a power combiner 524, which combines the modulated signals to produce a combined signal which is coupled into a HCF 512 and is transmitted via path 510.

By adjusting parameters of the lasers 502A-C, and of the modulation apparatuses 504A-C, the signal properties of the combined signal produced by power combined 524 and the signal properties of the sub-channels produced by modulation apparatuses 504A-C, are adjustable to achieve the properties described herein which mitigate an impact of GLA on the combined signal.

Though system 530, and the respective systems 500 and 520 of FIGs 5A and 5B respectively, have been described with reference to generating and modulating sub-channels of a signal, in various examples the systems further comprise additional lasers and modulation apparatuses to enable generation and modulation of sub-channels of a plurality of channels of a signal.

Additionally, though FIG. 5A-5C have been described with reference to generating sub-channels of a signal which are associated with respective different carrier waves, in various examples the a multi-carrier combination technique such as OFDM is implemented to produce a multi-carrier signal. In such cases, the DAC of systems 500, 520 and/or 530, for example, is used to generate a single analog signal comprising a punctured spectrum. A punctured spectrum refers to a spectrum having at least one component which is substantially zero or has an intensity lower than a threshold intensity relative to other components of the spectrum. The single analog signal is used to modulate a single laser which therefore produces a signal with a punctured spectrum across a channel comprising the signal. In effect, this technique excludes specific sub-carriers from a channel comprising the generated signal by the laser. Excluding sub-carriers when producing a carved multi-carrier signal may be viewed as modulating the sub-carrier components of the signal.

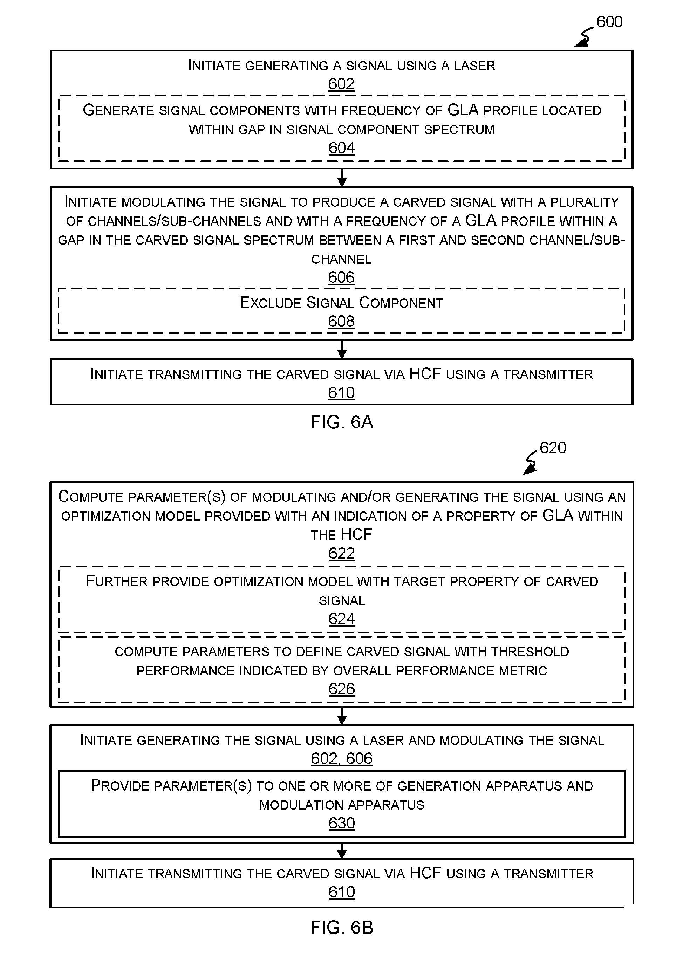

Numerous techniques for reducing an impact of GLA on a signal for transmission, by a transmitter, via a HCF, have been disclosed herein. To mitigate the impact of GLA on a signal for transmission, the method 600 of FIG. 6A is used.

Method 600 comprises initiating generating a signal using a laser 602, for example in accordance with the techniques described herein.

Optionally, block 602 comprises generating 604 first and second signal components, wherein a frequency within a GLA profile is located in a gap in a spectrum of the first signal component and the second signal component. In this way, a plurality of carrier waves is enabled to be generated such that they avoid a frequency at which GLA would attenuate the carrier wave.

Method 600 further comprises initiating 606 modulating the signal to produce a carved signal with a plurality of channels (and/or sub-channels) and with a frequency within a GLA profile located within a gap in the spectrum of the carved signal between a first and a second channel (or sub-channel). In this way, a plurality of modulated signal components (channels and/or sub-channels) are enabled to be generated such that they avoid a frequency at which GLA would attenuate the modulated signal components.

Optionally, block 606 comprises excluding a signal component (for example a sub-carrier) from the carved signal, such as by controlling a DAC to cause it to generate a punctured signal spectrum, wherein the punctured signal spectrum is further used to modulate a laser to generate a signal having a punctured spectrum, for transmission. In this way, a multi-carrier combination technique is implemented to produce a multi-carrier signal. In this case, the carved signal is a multi-carrier signal, as describe above.

Finally, method 600 comprises initiating 610 transmitting the carved signal via a HCF using a transmitter. In this way, an impact of GLA on the carved signal that would otherwise have attenuated the carved signal is reduced.

FIG. 6B is a flow diagram of an example method 620 which expands upon the method 600 of FIG. 6A. It should be appreciated that method 620 is exemplary and that in some cases one or more of the blocks described below are implemented as part of or in addition to the method 600.

Method 620 comprises computing a parameter (or a plurality of parameters) of the modulating and/or the generating of a carved signal using an optimization model 622. The carved signal is to be transmitted, via a HCF, by a transmitter. The optimization model is provided with an indication of a property of GLA within the HCF.

Using an optimization model refers to providing an input to a model which provides as an output parameter to be provided to a generation apparatus and/or a modulation apparatus, to cause a signal to be generated and/or modulated such that an impact of GLA on the signal is reduced. The parameter defines a property of the signal after generation and/or modulation. A property of the signal refers for example to a frequency, amplitude, number of signal components, modulation scheme, and/or any other property related to defining a signal which avoids (i.e. has no component with a frequency corresponding to) a frequency within a GLA profile.

The property indicating GLA within the HCF via which the signal is to be transmitted refers to a property affecting an impact of GLA within the HCF on the signal. Examples of the property indicating GLA include a GLA frequency, a GLA profile, a volume of gas present within the HCF, a species of gas present within the HCF, a density of gas present within the HCF, and/or a length of the HCF. In some cases, GLA frequencies are known and are accessible by the optimization model. In some further cases, GLA profiles are computed using a known GLA frequency in combination with an indication of a magnitude of GLA at the GLA frequency, which can be determined for example by multiplying a density of gas corresponding to the GLA with a volume of the HCF, computed for example by multiplying a cross-sectional area of the HCF with a length of the HCF.

Measurements of the HCF can be taken to determine the above-mentioned properties, or a property of the HCF can be predefined for example as an average value indicative of GLA typically encountered in HCFs.

Alternatively, the property indicating GLA can be determined using spectral analysis methods, such as by transmitting a reference signal via the HCF, receiving the signal, and computing a difference between the transmitted and the received signal. This enables a GLA profile to be empirically determined.

The property indicating GLA within the HCF, and the measurements associated with the property where used, are in some cases performed once, upon initialization of an optical communication system comprising the HCF. Initialization may be performed after laying the HCF and/or connecting a transmitter and/or a receiver via the HCF. This is because GLA within a HCF does not vary, during normal use over time, to a high enough degree to impact the adjustments described herein in terms of their reduction of the impact of GLA on a transmitted signal.

As such, the optimization model is used to compute the parameter once, and is then in various examples used to configure a transmitter (comprising the modulation apparatus and/or the generation apparatus) to cause the parameter to be used to generate and/or modulate a signal to produce a carved signal defined at least in part by the parameter, without further recomputing a parameter or computing a new parameter. In some cases, the optimization model is used to compute the parameter over a single time period, for example where a preliminary parameter is computed (and caused to be applied to a transmitter), the transmitter transmits the carved signal defined by the parameter, and then feedback is received from a receiver and provided as input to the optimization model to compute a parameter to refine the signal that is transmitted and further reduce the impact of GLA on the signal.

After the single time period has elapsed, an parameter is in some cases no longer computed. The single time period is for example one hour, two hours, or another time period which is shorter than a time period during which a signal is to be transmittable via the HCF during active use, such as over a lifetime of the HCF.

The method 620 is therefore applicable to compute a parameter defining at least in part a first signal for transmission via a first HCF, and then to compute a parameter defining at least in part a second signal for transmission via a second HCF. This is enabled, for example, by the method 620 being performed by an entity which is independent of an optical communication system comprising the first HCF and an optical communication system comprising the second HCF.

The parameter computed by block 622 is in various examples one or more of a parameter defining: a roll-off factor of a channel or sub-channel, a central frequency of a channel or sub-channel, a bandwidth of a channel or sub-channel, a subcarrier which is excluded from a multi-carrier signal, a sub-channel separation, and a modulation technique. A parameter defining a modulation technique refers, for example, to a parameter which limits a maximum frequency modulation of a carrier wave performed by a modulation apparatus and/or which defines an amplitude modulation of a carrier wave performed by the modulation apparatus.

Optionally, method 610 comprises computing a plurality of parameters which define a property of the carved signal 626. For example, as mentioned above, defining a roll-off factor of a first sub-channel of a channel of the carved signal is in some cases accompanied by defining a roll-off factor of a second sub-channel of the channel of the carved signal. It should be appreciated that any number of adjustments, as described herein, are in various examples caused to be applied to a signal in combination with each other.

The plurality of parameters are computed in block 626 such that an overall performance metric of the carved signal indicates a threshold performance.

The overall performance metric of the signal as described herein refers to an indication of an ability of the signal to perform its function, e.g. for a modulated signal component to encode a data element and be accurately decoded, with for example no or little error. Examples of an overall performance metric of the carved signal comprise a bit error rate over the spectrum of the signal, an overall data rate of the signal (i.e. how much data is encoded per time period by the signal and in some cases also decoded at the receiver correctly), an average difference between a demodulated data element and a data element used to modulate a signal for transmission over the spectrum of the signal, an error vector magnitude over the spectrum of the signal and/or any other metric indicating a quality of service or performance of the carved signal.

By computing a plurality of parameters to achieve a threshold performance indicated by an overall performance metric, the optimization model may compute for example that, within a same channel, GLA at a first frequency of a GLA profile would have less of an impact on the carved signal than GLA at a second frequency of a GLA profile (such as using a magnitude of the GLA profile at the first and second frequencies). The optimization model may therefore compute a parameter which defines the carved signal to have a gap between two sub-channels of the same channel such that the second frequency is located within the gap in the signal spectrum over the channel. The first frequency may overlap with a sub-channel. This technique is especially suitable wherein limited resources are available, for example wherein a limited number of sub-channels in the carved signal are able to be produced, or where a power of a laser comprised in the generation apparatus is limited.

Additionally or alternatively, block 622 optionally comprises further providing the optimization model with a target property of the carved signal. Examples of the target property comprise a baud, a modulation format, and/or a required quality of service or performance metric (such as the overall performance metric mentioned above).

A modulation format, as defined herein, refers to a parameter controlling how data is represented as a modulation of a signal.

The possible states of properties of a modulated signal, each state representing a particular value, defines a modulation format. Each state of properties is also referred to as a constellation point, where the possible states of properties of the signal can be represented by a constellation.

A modulation format comprises, for example, a constellation size, forward error correction overhead, and/or constellation shape (defined by probabilistic constellation shaping or geometric constellation shaping).

A constellation size of a channel refers to a number of constellation points within the channel. A higher constellation size refers to a higher number of constellation points and therefore a higher number of possible states of a signal within a channel.

A forward error correction overhead of a channel refers to an amount of redundant information used alongside data to produce a modulated signal at a transmitter. The redundant information is encoded within the modulated signal.

Geometric constellation shaping of a channel refers to adjusting a position of the constellation points within a constellation of a channel.

Probabilistic constellation shaping of a channel refers to adjusting how often a constellation point is used to represent data.

The baud of a channel (or sub-channel) refers to a number of constellation points represented by a signal component within the channel per second. Baud is therefore defined by how often a signal component within a channel is modulated between distinct states. The baud of a channel defines a data transmission rate of the channel. By reducing a baud of a channel, each state of a transmitted signal component within the channel is received for a longer duration at a receiver, thereby meaning that the signal component is less susceptible to distortion caused by noise (which is more erratic over shorter time scales).

Examples of specific modulation formats further include 64-quadrature amplitude modulation (64-QAM), 16-quadrature amplitude modulation (16-QAM), quadrature phase shift keying (QPSK), differential phase shift keying (DPSK), amplitude-shift keying (ASK), amplitude modulation (AM), frequency modulation (FM), and 32-quadrature amplitude modulation (32-QAM).

The optimization model uses the provided inputs to the model to compute the parameter(s).

Once a parameter is computed, method 620 further comprises initiating generating and modulating a signal to produce the carved signal. This corresponds to both of blocks 602 and 604 of FIG. 6A, and is performed by providing the computed parameter(s) to one or more of a generation and a modulation apparatus. A generation and a modulation apparatus have been described with reference to FIG. 5.

Initiating generating and modulating a signal to produce the carved signal comprises causing the generation and/or modulation apparatus to apply the parameter to their operation and therefore generate and modulate a signal to produce a carved signal which is defined by the parameter.

Transmission of the carved signal, via a HCF, is then initiated 610. A signal having a mitigated impact of GLA is therefore transmitted via the HCF.

In some cases, where the carved signal is to be transmitted and subsequently received by a receiver, an indication of the parameter is provided to a receiver for use by the receiver to demodulate the signal. For example, the receiver may be provided with an indication of a channel and/or sub-channel bandwidth or a number of channels in the carved signal, which enables the receiver to demodulate the signal components within the channel.

The optimization model of block 622 will now be elaborated upon. The optimization model in some cases comprises a rule, a lookup table, and/or a machine-learning model.

In cases wherein the model comprises a rule, the rule is defined to map an input property indicating GLA within the HCF, to the parameter which at least in part defines a property of the carved signal to mitigate an impact of GLA on the signal.

In cases wherein the model comprises a lookup table, the lookup table is constructed to map an input property indicating GLA within the HCF, to the parameter which at least in part defines a property of the carved signal to mitigate an impact of GLA on the signal.

In cases wherein the model comprises a machine-learning model, the machine-learning model is trained, such as using supervised training, to receive an input an input property indicating GLA within the HCF, and to output a computed parameter which at least in part defines a property of the carved signal to mitigate an impact of GLA on the signal.

Where an input property indicating GLA within the HCF is mentioned above, in various examples the model is configured to access this input or is configured to be provided with this input. In some cases, an input property indicating GLA within the HCF is determined empirically, such as by performing a measurement of the HCF or of gas located interior to the HCF, or by measuring a signal produced by a transmitter prior to transmitting the signal. In other cases, the input property indicating GLA within the HCF is defined non-empirically, such as by defining default values, receiving values input by a user, or by defining the input property based on a characteristic of the HCF. For example, the input property may be defined using an average gas concentration within a type of the HCF.

The model is constructed to map an input property indicating GLA within the HCF, to the parameter which at least in part defines a property of the carved signal to mitigate an impact of GLA on the signal. The model is therefore in various examples constructed by receiving a plurality of input properties of the GLA within the HCF. Additionally, parameters which at least in part define a property of a carved signal to mitigate an impact of GLA on the signal, and that are associated with each of the input properties, are also received.

The plurality of input properties and associated parameters are for example obtained by varying parameters defining a property of a carved signal to be transmitted via a HCF in a test optical communication system.

Additionally or alternatively, they are obtained by varying properties of GLA within the HCF, and recording the varying properties. The associated parameters are for example obtained by testing parameters of the modulation and/or generation of the carved signal for each of the varying input properties, and analyzing an indication of the impact of GLA on the signal to record associated parameters that reduce an impact of GLA on the signal or optimize another metric, such as that achieve a threshold performance indicated by a overall performance metric.

In some cases, a plurality of varying input properties are associated with a single associated parameter, i.e. a plurality of properties of GLA within a HCF are varied, and a single parameter of the modulation and/or generation of a carved signal and that reduces an impact of GLA on the carved signal is recorded. In various examples, a single parameter defines a plurality of properties of the carved signal, and in other examples a single parameter defines only a single property of the carved signal.

The recorded input properties and associated parameters are then received, and used to construct the model.

In cases wherein the model comprises a machine learning model, the associated parameters are in some cases treated as ground truth parameters, and the received input properties are treated as training inputs, wherein the machine learning model is trained, via supervised training, to minimize a loss between an output parameter in response to provided input properties and a corresponding (to the provided input properties) ground truth parameter.

Alternatively, in addition to an associated parameter with received input properties being received, an indication of an overall performance metric of the carved signal is also received. The indication of the overall performance metric is then used to train the machine learning model as the ground truth value, and the associated parameter is provided as a training input alongside the received input properties. In this way, the machine learning model is trained in a supervised way to compute an indication overall performance metric in response to the model being provided with input properties and associated parameters. The machine learning model can then be provided with input properties indicating GLA within a HCF, and used to compute an indication overall performance metric of the carved signal in response to varying parameters. A parameter may therefore be computed, during use of the model, which maximizes the performance (or achieves a threshold performance) indicated by the indication of overall performance metric, by any maximization method, such as by using a gradient-based optimization method, a random search method, Bayesian optimization, or by using any other maximization method.

Illustratively, the model in one example comprises a plurality of rules, being:
Rule 1: If a gas line profile has a magnitude greater than 10 dB at a first frequency within a gas line absorption profile which overlaps with a signal channel, go to rule 2. If not go to Rule 3.
Rule 2: Compare gas line profile magnitude at first frequency with a gas line profile magnitude at a different frequency which overlaps with the signal channel. If the magnitude at the different frequency is higher than the magnitude at the first frequency, computed parameter is a parameter which defines the carved signal to have two sub-channels of the signal channel,
and a gap in the signal spectrum over the channel, between the two sub-channels, at the different frequency.
Rule 3: If the gas line profile has a magnitude greater than 5 dB, computed parameter is a parameter which defines the carved signal to have a gap in the signal spectrum, between two channels, wherein the first frequency is located within the gap.

In use, properties indicating GLA within the HCF, being for example GLA profiles and associated frequencies, are received. The received properties are then processed using the model to map the received properties to a parameter defining a property of the carved signal, for example being the number and location of sub-channels of the carved signal.

Similarly, during use of a lookup table, the received properties are searched for in the lookup table and an associated parameter is retrieved.

A parameter defining a property of a carved signal to be transmitted via a HCF such that an impact of GLA on the carved signal is mitigated, wherein the parameter is specific to an optical communication system which is configured to use the carved signal, is therefore enabled.

By taking into account properties indicating GLA within the HCF, the properties being specific to the HCF (e.g. a length of the HCF or a GLA profile determined empirically from the HCF), the method of computing a parameter which mitigates an impact of GLA on a carved signal for transmission via a HCF is adaptive to a specific HCF. For example, when performed using a property indicating GLA within a first HCF, a first parameter is computed. However, when performed using a property indicating GLA within a second HCF, a second parameter is computed. As mentioned above, the parameter can be computed once or over a single time period and then permanently applied to each optical communication system comprising the HCF.

It should be noted, however, that the method of computing a parameter is capable of being performed without using a property indicating GLA within the HCF that is specific to the HCF. For example, an average GLA profile over a plurality of HCFs can be used to compute the parameter, in which case the method is not adaptive to the specific HCF but is still enabled to compute the adjustment.

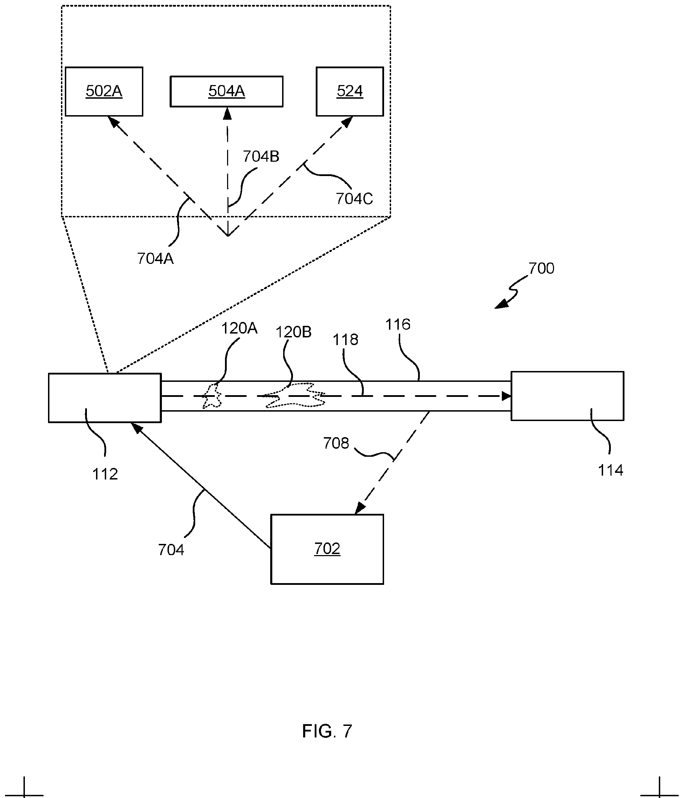

The methods and techniques described thus far are performed by a computing system. FIG. 7 is a schematic diagram of an optical communication system 700 similar to that illustrated in FIG. 1A, but where the system 700 comprises an apparatus 702 for mitigating gas line absorption. Apparatus 702 is configured to perform the methods described herein.

Apparatus 702 is independent of transmitter 112 and of receiver 114, which enables the apparatus 702 to be used to compute a parameter which defines a carved signal to avoid a frequency within a GLA profile associated with the HCF 116 such that the carved signal can be transmitted by the transmitter 112 via the HCF 116. Subsequently, the apparatus 702 is enabled to be used to compute a parameter which defines a carved signal to avoid a frequency within a GLA profile associated with a different HCF of a different optical communication system to system 700.

Apparatus 702 is configured to communicate with transmitter 112 (via path 704) so as to be capable of configuring the transmitter 112 to cause the parameter to be applied by a generation apparatus and/or a modulation apparatus such that a carved signal is produced as defined by the parameter. Additionally, apparatus 702 is configured to communicate with transmitter 112 to cause transmission of the carved signal via the HCF 116. In some cases, apparatus 702 is further configured to communicate with receiver 114, so as to be capable of receiving feedback from the receiver 114, receiving a property indicating GLA within the HCF 116, and/or of providing an indication of a computed parameter to the receiver 114.

In various examples, the apparatus 702 is configured to communicate directly with a generation apparatus 502A comprising a laser, a modulation apparatus 504A, and/or a power combiner 524, via paths 704A-C respectively. Paths 704A-C represent branches of the path 704 after the path enters the transmitter 112.

Finally, in some cases, apparatus 702 is configured to communicate with the HCF 116 (via path 708), for example wherein the HCF 116 comprises a sensor used to communicate a property indicating GLA within the HCF 116 to the apparatus 702.

Though apparatus 702 is illustrated as being independent of transmitter 112 and receiver 114, in various examples, apparatus 702 is comprised in the transmitter 112. This facilitates easier access to initiate the generation and/or modulation to produce the carved signal, and/or transmission of the carved signal. The apparatus 702 initiating generation, modulation, or transmission refers to the apparatus 702 causing those operations to be performed, for example by signaling to the respective generation apparatus, modulation apparatus, and/or transmitter that the operation should be performed. In some cases, an indication of the parameter is also signaled to the respective apparatus.

In alternative cases, the apparatus 702 performs the generation, modulation and/or transmission, for example because the apparatus 702 comprises or is comprised in the transmitter 112.

Generation, modulation and transmission is initiated in various examples by an apparatus such as apparatus 702 of FIG. 7, which comprises a computing-based device.

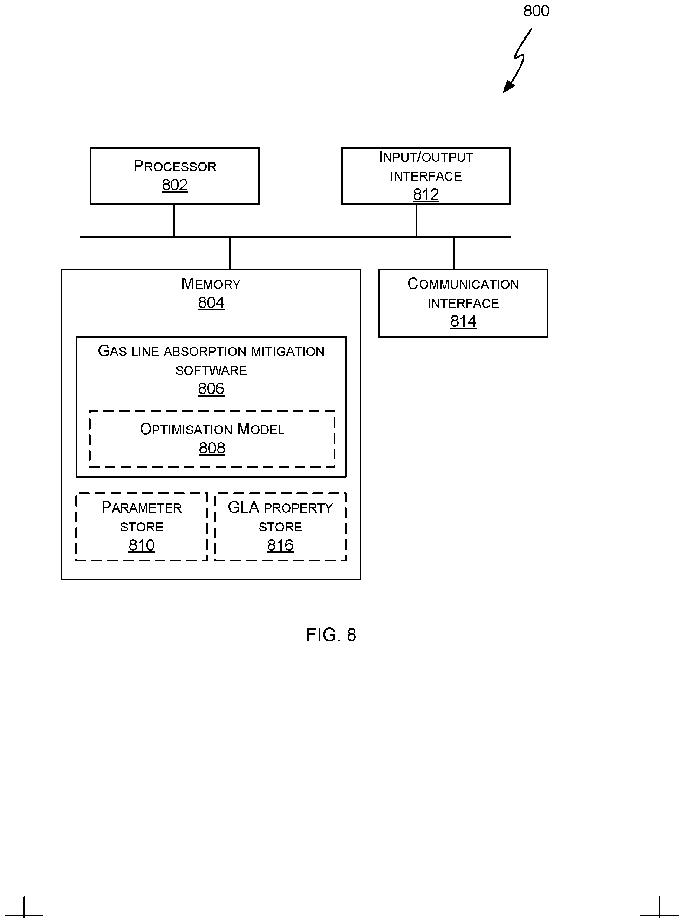

FIG. 8 illustrates various components of an exemplary computing-based device 800 which are implemented as any form of a computing and/or electronic device, and in which embodiments of a method for mitigating gas line absorption of a signal transmitted via a HCF, as described herein (e.g. any or all of the method of FIGs. 6A and 6B) are implemented in some examples. In some examples, the computing-based device 800 is a general-purpose computer that is activated or reconfigured by a computer program stored in the computer. In other examples the computing-based device is specially constructed for the intended purpose.

Computing-based device 800 comprises one or more processors 802 which are microprocessors, controllers or any other suitable type of processors for processing computer executable instructions to control the operation of the device in order to perform the method for mitigating gas line absorption of a signal transmitted via a HCF described herein. The processors 802 may include at least one general-purpose processing device such as a central processing unit, microprocessor, complex instruction set computing (CISC) microprocessor, reduced instruction set computing (RISC) microprocessor, or other general-purpose processing device. In some examples, for example where a system on a chip architecture is used, the processors 802 include one or more special-purpose processing device such as a fixed function block (also referred to as an accelerator) which implements a part of the method for mitigating gas line absorption of a signal transmitted via a HCF described herein in hardware (rather than software or firmware). The special-purpose processing device may be configured to execute instructions for performing the operations and methods described herein. Platform software comprising an operating system or any other suitable platform software is provided at the computing-based device to enable application software such as gas line absorption mitigation software (which is configured to perform the methods of mitigating gas line absorption of a signal transmitted via a HCF as described herein) to be executed on the device.

Alternatively, or in addition, the functionality described herein is performed, at least in part, by one or more hardware logic components. For example, and without limitation, illustrative types of hardware logic components that are optionally used include Field-programmable Gate Arrays (FPGAs), Application-specific Integrated Circuits (ASICs), Application-specific Standard Products (ASSPs), System-on-a-chip systems (SOCs), Complex Programmable Logic Devices (CPLDs), Graphics Processing Units (GPUs).

Gas line absorption mitigation software 806 comprises computer executable instructions that, when executed, cause the computer-based device 800 to perform the methods for mitigating gas line absorption of a signal transmitted via a HCF, described herein (e.g. any or all of the methods of FIGs. 6A and 6B). The gas line absorption mitigation software 806 may comprise the optimisation model 808 that is used to compute the parameter defining the carved signal to reduce the impact of gas line absorption of the signal, as described herein.

The computer executable instructions are provided using any computer-readable media that is accessible by computing based device 800. Computer-readable media includes, for example, computer storage media such as memory 804 and communications media. Computer storage media, such as memory 804, includes volatile and non-volatile, removable and non-removable media implemented in any method or technology for storage of information such as computer readable instructions, data structures, program modules or the like. Computer storage media includes, but is not limited to, random access memory (RAM), read only memory (ROM), erasable programmable read only memory (EPROM), electronic erasable programmable read only memory (EEPROM), flash memory or other memory technology, compact disc read only memory (CD-ROM), digital versatile disks (DVD) or other optical storage, magnetic cassettes, magnetic tape, magnetic disk storage or other magnetic storage devices, or any other non-transmission medium that is used to store information for access by a computing device. In contrast, communication media embody computer readable instructions, data structures, program modules, or the like in a modulated data signal, such as a carrier wave, or other transport mechanism. As defined herein, computer storage media does not include communication media. Therefore, a computer storage medium should not be interpreted to be a propagating signal per se. Although the computer storage media (memory 804) is shown within the computing-based device 800 it will be appreciated that the storage is, in some examples, distributed or located remotely and accessed via a network or other communication link (e.g. using communication interface 814).

Optionally, memory 804 comprises a parameter store 810 which is arranged to store adjustments computed by the gas line absorption mitigation software 806. The memory 804 may also comprise a GLA property store 816 which is arranged to store properties indicating GLA of a HCF that are used by the gas line absorption mitigation software 806 to compute the parameter defining the carved signal.

The computing-based device 800 also comprises an input/output interface 812 arranged to output display information in some examples to a display device which may be separate from or integral to the computing-based device. The display information may provide a graphical user interface.

The input/output interface 812 is also arranged to receive and process input from one or more devices, such as a user input device (e.g. a mouse, keyboard, camera, microphone or other sensor), a transmitter, and/or a receiver.

For example, where the computing-based device 800 is part of the transmitter (e.g. part of transmitter 112 shown in FIG. 1B), the input/output interface 812 may output the parameters computed by the gas line absorption mitigation software 806 to the control circuitry in the transmitter that controls the operation of the transmitter. Where the computing-based device 800 is separate from the transmitter, it may output the parameters to the transmitter via the input/output interface 812 or alternatively via the communication interface 814. In such an implementation, feedback from a receiver may be received by the computing-based device 800 via the input/output interface 812 or via the communication interface 814. Feedback may be stored in the GLA property store 816.

Alternatively or in addition to the other examples described herein, examples include any combination of the following:

Clause A. An apparatus comprising: a processor; and a memory storing instructions that, when executed by the processor, perform a method for mitigating gas line absorption of a transmitted signal via a hollow core fiber by a transmitter, the method comprising: initiating generating a signal using a laser; initiating modulating the signal to produce a carved signal, wherein the carved signal comprises a plurality of channels, and wherein a spectrum of the carved signal comprises substantially zero signal intensity at a frequency within a gas line absorption profile, the frequency being between a first channel and a second channel of the carved signal; and initiating transmission of the carved signal via the hollow core fiber by the transmitter.

In this way, an apparatus which generates a modulated signal having a gap in the spectrum coinciding with a GLA frequency is provided. This reduces an impact of GLA on the modulated signal, thereby improving a resiliency of the modulated signal to errors.

Clause B. The apparatus of clause A, wherein the plurality of channels of the carved signal is a plurality of sub-channels of a channel of the signal, and wherein the first channel and the second channel are a first sub-channel and a second sub-channel respectively.

In this way, an impact of GLA on a channel of the modulated signal is reduced, improving a resiliency of the channel to errors.

Clause C. The apparatus of clause B, wherein the first sub-channel has a first roll-off factor, wherein the second sub-channel has a second roll-off factor which is higher than the first roll-off factor, and wherein the second sub-channel has a frequency range which is closer to a frequency defining an edge of the channel than a frequency range of the first sub-channel.

In this way, a sub-channel towards the interior of a channel has a smaller roll-off factor than a sub-channel further towards the exterior edge of a channel, which facilitates side-operations such as baud rate estimation and/or time recovery which may be improved by implementing the larger roll-off factors.

Clause D. The apparatus of clause A to clause C, wherein generating a signal using a laser comprises generating the signal using a master laser configured to cause a frequency comb to be produced, and wherein the modulating the signal comprises modulating a frequency component of the frequency comb, the frequency component being a component of the signal.

Clause E. The apparatus of clause A to clause C, wherein generating a signal using a laser comprises generating the signal using a plurality of phase-locked lasers, and wherein the modulating the signal comprises modulating an output signal of a phase-locked laser of the plurality of phase-locked lasers, the output signal being a component of the signal.

Clause F. The apparatus of clause A to clause E, wherein modulating the signal is performed at least in part by excluding a component of the signal from being present in the carved signal in response to the component having a frequency which is within the gas line absorption profile.

Clause G. The apparatus of clause A to clause F, wherein the carved signal is a multi-carrier signal, and wherein modulating the signal is performed at least in part by excluding a sub-carrier of the signal from being present in the carved signal in response to the sub-carrier having a frequency which is within the gas line absorption profile.

In these ways, a method of generating a modulated signal such that it accurately comprises a gap at a GLA frequency is provided.

Clause H. The apparatus of any of clause A to clause G, wherein the signal comprises a first component and a second component, and wherein modulating the signal comprises modulating the first component and modulating the second component such that any frequency of the first component does not overlap with any frequency of the second component, and such that any frequency of the first component and any frequency of the second component do not overlap with the frequency within the gas line absorption profile.

Clause I. The apparatus of clause A to clause H, wherein generating the signal comprises using the laser to generate a first and a second component of the signal by configuring a parameter of the laser which defines the first and the second component of the signal, wherein a spectrum of the signal comprises substantially zero signal intensity at the frequency within the gas line absorption profile, the frequency being between the first component of the signal and the second component of the signal.

In this way, the laser is configured to generate signal components with the desired properties for avoiding GLA frequencies without generating an entire signal spectrum and subsequently modulating a portion of the generated signal components, which requires additional resources and system complexity.

Clause J. The apparatus of clause A to clause I, the method further comprising: computing a parameter of one or more of the modulating and the generating of the signal by using an optimization model and by providing the optimization model with an input indication of a property of gas line absorption within the hollow core fiber, wherein the optimization model is configured to compute the parameter using the input indication of the property of gas line absorption, wherein the carved signal is defined at least in part by the parameter, and wherein one or more of: the initiating generating the signal comprises providing the parameter to a generation apparatus configured to generate the signal; and the initiating modulating the signal comprises providing the parameter to a modulation apparatus configured to modulate the signal.

Clause K. The apparatus of clause J, wherein the indication of the property of gas line absorption within the hollow core fiber is one or more of: a gas line absorption frequency, a gas line absorption profile, a magnitude of a gas line absorption profile, a volume of gas present within the hollow core fiber, a species of gas present within the hollow core fiber, a density of gas present within the hollow core fiber, a length of the hollow core fiber.

In this way, the provided apparatus implements an adaptive method to the hollow core fiber.

Clause L. The apparatus of clause J or clause K, wherein the computing the parameter is further performed by providing the optimization model with an input target property of the carved signal, and wherein the optimization model is configured to compute the parameter such that the carved signal is caused to have the input target property.

Clause M. The apparatus of clause I to clause L, wherein computing the parameter comprises computing a plurality of parameters, wherein the carved signal is defined at least in part by the plurality of parameters, wherein: providing the parameter to the generation apparatus comprises providing a parameter of the plurality of parameters to the generation apparatus, and providing the parameter to the modulation apparatus comprises providing a parameter of the plurality of parameters to the modulation apparatus, such that the plurality of parameters are provided to one or more of the generation apparatus and the modulation apparatus, and wherein the optimization model is used to compute the plurality of parameters such that an overall performance metric of the carved signal indicates a performance greater than a threshold performance of the carved signal.

Clause N. The apparatus of clause A to clause M, wherein the carved signal comprises a signal component having a roll-off factor of 0 to 0.1.

Clause O. The apparatus of clause A to clause N, the apparatus further comprising one or more of: the laser, a modulation apparatus configured to modulate the signal wherein initiating modulating the signal is initiating modulating the signal by the modulation apparatus, the transmitter.

Clause O. A method for mitigating gas line absorption of a transmitted signal via a hollow core fiber by a transmitter, the method comprising: initiating generating a signal using a laser; initiating modulating the signal to produce a carved signal, wherein the carved signal comprises a plurality of channels, and wherein a spectrum of the carved signal comprises substantially zero signal intensity at a frequency within a gas line absorption profile, the frequency being between a first channel and a second channel of the carved signal; and initiating transmission of the carved signal via the hollow core fiber by the transmitter.

Clause P. The method of clause O, wherein the plurality of channels is a plurality of sub-channels of a channel of the signal, and wherein the first channel and the second channel are a first sub-channel and a second sub-channel respectively.

Clause Q. The apparatus of clause P, wherein the first sub-channel has a first roll-off factor, wherein the second sub-channel has a second roll-off factor which is higher than the first roll-off factor, and wherein the second sub-channel has a frequency range which is closer to a frequency defining an edge of the channel than a frequency range of the first sub-channel.

Clause R. The method of clause O to clause Q, wherein generating a signal using a laser comprises generating the signal using a master laser configured to cause a frequency comb to be produced, and wherein the modulating the signal comprises modulating a frequency component of the frequency comb, the frequency component being a component of the signal.

Clause S. The method of clause O to clause Q, wherein generating a signal using a laser comprises generating the signal using a plurality of phase-locked lasers, and wherein the modulating the signal comprises modulating an output signal of a phase-locked laser of the plurality of phase-locked lasers, the output signal being a component of the signal.

Clause T. The method of clause O to clause Q, wherein modulating the signal is performed at least in part by excluding a component of the signal from being present in the carved signal in response to the component having a frequency which is within the gas line absorption profile.

Clause U. The method of clause O to clause T, wherein the carved signal is a multi-carrier signal, and wherein modulating the signal is performed at least in part by excluding a sub-carrier of the signal from being present in the carved signal in response to the sub-carrier having a frequency which is within the gas line absorption profile.

Clause V. The method of any of clause O to clause U, wherein the signal comprises a first component and a second component, and wherein modulating the signal comprises modulating the first component and modulating the second component such that any frequency of the first component does not overlap with any frequency of the second component, and such that any frequency of the first component and any frequency of the second component do not overlap with the frequency within the gas line absorption profile.

Clause W. The method of clause O to clause V, wherein generating the signal comprises using the laser to generate a first and a second component of the signal by configuring a parameter of the laser which defines the first and the second component of the signal, wherein a spectrum of the signal comprises substantially zero signal intensity at the frequency within the gas line absorption profile, the frequency being between the first component of the signal and the second component of the signal.

Clause X. The method of clause O to clause W, further comprising: computing a parameter of one or more of the modulating and the generating of the signal by using an optimization model and by providing the optimization model with an input indication of a property of gas line absorption within the hollow core fiber, wherein the optimization model is configured to compute the parameter using the input indication of the property of gas line absorption, wherein the carved signal is defined at least in part by the parameter, and wherein one or more of: the initiating generating the signal comprises providing the parameter to a generation apparatus configured to generate the signal; and the initiating modulating the signal comprises providing the parameter to a modulation apparatus configured to modulate the signal.

Clause Y. The method of clause X, wherein the indication of the property of gas line absorption within the hollow core fiber is one or more of: a gas line absorption frequency, a gas line absorption profile, a magnitude of a gas line absorption profile, a volume of gas present within the hollow core fiber, a species of gas present within the hollow core fiber, a density of gas present within the hollow core fiber, a length of the hollow core fiber.

Clause Z. The method of clause X or clause Y, wherein the computing the parameter is further performed by providing the optimization model with an input target property of the carved signal, and wherein the optimization model is configured to compute the parameter such that the carved signal is caused to have the input target property.

Clause ZA. The apparatus of clause X to clause Z, wherein computing the parameter comprises computing a plurality of parameters, wherein the carved signal is defined at least in part by the plurality of parameters, wherein: providing the parameter to the generation apparatus comprises providing a parameter of the plurality of parameters to the generation apparatus, and providing the parameter to the modulation apparatus comprises providing a parameter of the plurality of parameters to the modulation apparatus, such that the plurality of parameters are provided to one or more of the generation apparatus and the modulation apparatus, and wherein the optimization model is used to compute the plurality of parameters such that an overall performance metric of the carved signal indicates a threshold performance of the carved signal.

Clause ZB. The apparatus of clause O to clause ZA, wherein the carved signal comprises a signal component having a roll-off factor of 0 to 0.1.

Clause ZC. A non-transitory computer-readable medium storing instructions that, when executed by a computer, direct the computer to perform the method of any of clause O to clause ZB.

The term 'computer' or 'computing-based device' is used herein to refer to any device with processing capability such that it executes instructions. Those skilled in the art will realize that such processing capabilities are incorporated into many different devices and therefore the terms 'computer' and 'computing-based device' each include personal computers (PCs), servers, mobile telephones (including smart phones), tablet computers, set-top boxes, media players, games consoles, personal digital assistants, wearable computers, and many other devices.

The methods described herein are performed, in some examples, by software in machine readable form on a tangible storage medium e.g. in the form of a computer program comprising computer program code means adapted to perform all the operations of one or more of the methods described herein when the program is run on a computer and where the computer program may be embodied on a computer readable medium. The software is suitable for execution on a parallel processor or a serial processor such that the method operations may be carried out in any suitable order, or simultaneously.

Those skilled in the art will realize that storage devices utilized to store program instructions are optionally distributed across a network. For example, a remote computer is able to store an example of the process described as software. A local or terminal computer is able to access the remote computer and download a part or all of the software to run the program. Alternatively, the local computer may download pieces of the software as needed, or execute some software instructions at the local terminal and some at the remote computer (or computer network). Those skilled in the art will also realize that by utilizing conventional techniques known to those skilled in the art that all, or a portion of the software instructions may be carried out by a dedicated circuit, such as a digital signal processor (DSP), programmable logic array, or the like.

Any range or device value given herein may be extended or altered without losing the effect sought, as will be apparent to the skilled person.

Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims.

It will be understood that the benefits and advantages described above may relate to one embodiment or may relate to several embodiments. The embodiments are not limited to those that solve any or all of the stated problems or those that have any or all of the stated benefits and advantages. It will further be understood that reference to 'an' item refers to one or more of those items.

The operations of the methods described herein may be carried out in any suitable order, or simultaneously where appropriate. Additionally, individual blocks may be deleted from any of the methods without departing from the scope of the subject matter described herein. Aspects of any of the examples described above may be combined with aspects of any of the other examples described to form further examples without losing the effect sought.

The term 'comprising' is used herein to mean including the method blocks or elements identified, but that such blocks or elements do not comprise an exclusive list and a method or apparatus may contain additional blocks or elements.

Additionally, as used in this disclosure, phrases of the form "at least one of an A, a B, or a C," "at least one of A, B, and C," and the like, should be interpreted to select at least one from the group that comprises "A, B, and C." Unless explicitly stated otherwise in connection with a particular instance in this disclosure, this manner of phrasing does not mean "at least one of A, at least one of B, and at least one of C." As used in this disclosure, the example "at least one of an A, a B, or a C," would cover any of the following selections: {A}, {B}, {C}, {A, B}, {A, C}, {B, C}, and {A, B, C}.

It will be understood that the above description is given by way of example only and that various modifications may be made by those skilled in the art. The above specification, examples and data provide a complete description of the structure and use of exemplary embodiments. Although various embodiments have been described above with a certain degree of particularity, or with reference to one or more individual embodiments, those skilled in the art could make numerous alterations to the disclosed embodiments without departing from the scope of this specification.

## Claims

1. An apparatus (800) comprising:
a processor (802); and
a memory (804) storing instructions that, when executed by the processor, perform a method (600) for mitigating gas line absorption of a transmitted signal via a hollow core fiber by a transmitter, the method comprising:
initiating generating a signal using a laser (602);
initiating modulating the signal to produce a carved signal (606),
wherein the carved signal comprises a plurality of channels, and
wherein a spectrum of the carved signal comprises substantially zero signal intensity at a frequency within a gas line absorption profile, the frequency being between a first channel and a second channel of the carved signal; and
initiating transmission of the carved signal via the hollow core fiber by the transmitter (610).

2. The apparatus of claim 1, wherein the plurality of channels of the carved signal is a plurality of sub-channels of a channel of the signal, and wherein the first channel and the second channel are a first sub-channel and a second sub-channel respectively.

3. The apparatus of claim 2, wherein the first sub-channel has a first roll-off factor, wherein the second sub-channel has a second roll-off factor which is higher than the first roll-off factor, and wherein the second sub-channel has a frequency range which is closer to a frequency defining an edge of the channel than a frequency range of the first sub-channel.

4. The apparatus of any of claims 1 to 3, wherein generating a signal using a laser comprises generating the signal using a master laser configured to cause a frequency comb to be produced, and wherein the modulating the signal comprises modulating a frequency component of the frequency comb, the frequency component being a component of the signal.

5. The apparatus of any of claims 1 to 3, wherein generating a signal using a laser comprises generating the signal using a plurality of phase-locked lasers, and wherein the modulating the signal comprises modulating an output signal of a phase-locked laser of the plurality of phase-locked lasers, the output signal being a component of the signal.

6. The apparatus of any of claims 1 to 5, wherein modulating the signal is performed at least in part by excluding a component of the signal from being present in the carved signal in response to the component having a frequency which is within the gas line absorption profile.

7. The apparatus of any of claims 1 to 6, wherein the carved signal is a multi-carrier signal, and wherein modulating the signal is performed at least in part by excluding a sub-carrier of the signal from being present in the carved signal in response to the sub-carrier having a frequency which is within the gas line absorption profile.

8. The apparatus of any of claims 1 to 7, wherein the signal comprises a first component and a second component, and wherein modulating the signal comprises modulating the first component and modulating the second component such that any frequency of the first component does not overlap with any frequency of the second component, and such that any frequency of the first component and any frequency of the second component do not overlap with the frequency within the gas line absorption profile.

9. The apparatus of any of claims 1 to 8, wherein generating the signal comprises using the laser to generate a first and a second component of the signal by configuring a parameter of the laser which defines the first and the second component of the signal, wherein a spectrum of the signal comprises substantially zero signal intensity at the frequency within the gas line absorption profile, the frequency being between the first component of the signal and the second component of the signal.

10. The apparatus of any of claims 1 to 9, the method further comprising:
computing a parameter of one or more of the modulating and the generating of the signal by using an optimization model and by providing the optimization model with an input indication of a property of gas line absorption within the hollow core fiber, wherein the optimization model is configured to compute the parameter using the input indication of the property of gas line absorption,
wherein the carved signal is defined at least in part by the parameter, and wherein one or more of:
the initiating generating the signal comprises providing the parameter to a generation apparatus configured to generate the signal; and
the initiating modulating the signal comprises providing the parameter to a modulation apparatus configured to modulate the signal.

11. The apparatus of claim 10, wherein the computing the parameter is further performed by providing the optimization model with an input target property of the carved signal, and wherein the optimization model is configured to compute the parameter such that the carved signal is caused to have the input target property.

12. The apparatus of claim 10 or claim 11, wherein computing the parameter comprises computing a plurality of parameters, wherein the carved signal is defined at least in part by the plurality of parameters,
wherein:
providing the parameter to the generation apparatus comprises providing a parameter of the plurality of parameters to the generation apparatus, and
providing the parameter to the modulation apparatus comprises providing a parameter of the plurality of parameters to the modulation apparatus,
such that the plurality of parameters are provided to one or more of the generation apparatus and the modulation apparatus, and
wherein the optimization model is used to compute the plurality of parameters such that an overall performance metric of the carved signal indicates a performance greater than a threshold performance of the carved signal.

13. The apparatus of any of claims 1 to 12, wherein the carved signal comprises a signal component having a roll-off factor of 0 to 0.1.

14. A method (600) for mitigating gas line absorption of a transmitted signal via a hollow core fiber by a transmitter, the method comprising:
initiating generating a signal using a laser (602);
initiating modulating the signal to produce a carved signal (606),
wherein the carved signal comprises a plurality of channels, and wherein a spectrum of the carved signal comprises substantially zero signal intensity at a frequency within a gas line absorption profile, the frequency being between a first channel and a second channel of the carved signal; and
initiating transmission of the carved signal via the hollow core fiber by the transmitter (610).

15. A non-transitory computer-readable medium storing instructions that, when executed by a computer, direct the computer to perform the method of claim 14.
